# EUROPÄISCHE PATENTSCHRIFT

(11) **EP 2 746 637 B1**
(45) Veröffentlichungstag und Bekanntmachung des Hinweises auf die Patenterteilung: **09.05.2018**
(21) Anmeldenummer: 12198368.8
(22) Anmeldetag: 20.12.2012
(51) Int. Cl.: F16L 33/207, F16L 33/22

(54) **Schlauchkupplung mit Klemmhülse**
Hose coupling with clamping piece
Couplage de tuyau avec douille de blocage

(43) Veröffentlichungstag der Anmeldung: 25.06.2014
(73) Patentinhaber: INNOTRADE Entwicklungs- und Vertriebsgesmbh, 6780 Silbertal (AT)
(72) Erfinder: Erhard, Wilhelm, 6780 Silbertal (AT); Geiser, Friedrich, 6714 Nüziders (AT); Vonbank, Herwig, A-6751 Innerbraz (AT)
(74) Vertreter: Kaminski Harmann

(56) Entgegenhaltungen:
- EP-A1- 1 291 569
- WO-A1-91/08414
- DE-B3-102007 010 164
- DE-C1- 3 520 874

## Beschreibung

Die Erfindung betrifft eine Klemmhülse für eine Schlauchkupplung mit Schlauchklemmvorrichtung, ein Kupplungselement für eine solche Schlauchkupplung, eine Schlauchkupplung mit einer Schlauchklemmvorrichtung mit einer solchen Klemmhülse und eine Schlauchklemmvorrichtung mit einer solchen Klemmhülse sowie ein Verfahren zum Befestigen eines Schlauchendes in einer Schlauchklemmvorrichtung mit einer solchen Klemmhülse.

Beim Erstellen von Schlauchleitungen wird zumindest ein Schlauchabschnitt mit einem Anschluss verbunden. Meist werden aber auch mehrere Schlauchabschnitte miteinander verbunden. Um solche Verbindungen zu realisieren werden Schlauchkupplungen eingesetzt. Eine Schlauchkupplung umfasst in der Regel ein erstes und ein zweites Kupplungselement, die lösbar, meist über ein Bjonettverschluss oder ähnliches, miteinander verbunden werden können. Das erste Kupplungselement ist so konfiguriert, dass es an einem Schlauchende eines ersten Schlauchabschnitts befestigt werden kann und das zweite Kupplungselement ist so konfiguriert, dass es an einem Anschluss, z.B. für Wasser oder Gas, bzw. an einem Schlauchende eines zweiten Schlauchabschnittes befestigt werden kann. Die Schlauchkupplung muss einfach aufgebaut und einfach handhabbar sein. Sie muss bei zusammengestellten Schlauchleitungen gewährleisten, dass diese dicht sind, mit Zug belastbar und auch unter dieser Zugbelastung einfach handhabbar sind.

Bei bekannten Schlauchkupplungen wird zur Befestigung eines Kupplungselements an einem Schlauchende, das Schlauchende über eine Innenhülse gestossen und mit Bindedraht, Schlauchbindern oder Manschetten an der Innenhülse befestigt. In manchen Fällen ist eine übergeschobene oder aufgeschraubte Aussenhülle vorgesehen, die dem Schutz dieser Befestigung dient. Die Montage von Schlauch und Kupplungselement ist in solchen Fällen meist nur mit Hilfe von Maschinen möglich. Bei der Montage mit Bindedraht werden z.B. Bindemaschinen benötigt, so dass diese Art der Befestigung des Schlauchs am Kupplungselement aufwendig ist und oft nicht vor Ort geschehen kann. Zudem ist bei diesen Befestigungen die gewünschte Zugfestigkeit nicht immer gewährleistet.

Abhilfe haben Schlauchkupplungen mit Klemmhülsen geschaffen, wie sie beispielsweise in EP 0 879 982 A2 offenbart sind. Die in EP 0 879 982 A2 gezeigten Drehkupplungen weisen eine Schlauchklemmvorrichtung auf, die eine Innenhülse, eine Klemmhülse und eine Aussenhülse umfasst. Auf die Innenhülse wird wie üblich der Schlauch mit seinem Schlauchende aufgezogen bzw. aufgestossen. Die Klemmhülse ist in axialer Richtung wechselseitig mit Einschnitten versehen so dass sie einen über einem bestimmten Bereich flexiblen Durchmesser aufweisst und über diesen Durchmesserbereich zusammengedrückt bzw. aufgeweitet werden kann. Sie ist in montiertem Zustand aussen auf dem Schlauch als Gegenstück zur Innenhülle angeordnet und wird mit Hilfe der radial noch weiter aussen angeordneten Aussenhülse gegen die Innenhülse gepresst. Dabei liegt eine Konusfläche der Aussenhülse an einer Konusfläche bzw. einer Zylinderfläche der Klemmhülse an. für die Montage wird die Aussenhülse in einer axialen Bewegung über die Klemmhülse geschoben, wobei über die Konusfläche eine radial nach innen gerichtete Kraft auf die Klemmhülse wirkt und diese radial nach innen gegen das eingeschobene Schlauchende und die darunter liegende Innenhülse presst. Auf diese Weise ist schliesslich das Schlauchende bzw. der Schlauchmantel des Schlauchendes zwischen der Innenhülse und der Klemmhülse eingeklemmt.

Um die Klemmwirkung stark zu erhöhen, wechseln sich an der Innenseite der Klemmhülse radial nach innen vorstehende, in Umfangsrichtung verlaufende Erhöhungen mit radialen, in Umfangsrichtung verlaufenden, nutartigen Vertiefungen ab. An der Aussenseite der Innenhülse sind gegengleich ausgebildete, in Umfangsrichtung verlaufende, radiale Erhöhungen und Vertiefungen bzw. Ringnuten vorgesehen. In montiertem Zustand greifen die Erhöhungen und Nuten der Klemmhülse und der Innenhülse ineinander, wobei die Schlauchwand des über die Innenhülse gestossenen Schlauchendes dazwischen dichtend eingeklemmt ist. Die dichtende Wirkung ist dabei primär auf unter Zug frontal gegeneinander bewegte Seitenflanken der Nuten und Erhöhungen und auf eine dadurch an diesen Flanken entstehende Press und Reibwirkung zurückzuführen.

In der DE 201 13 434 U1 ist eine Schlauchklemmvorrichtung für Schlauchkupplungen, wie sie in EP 0 879 982 A2 offenbart sind, mit einer weiter entwickelten Klemmhülse offenbart, welche ein Herausrutschen des zwischen der Innenhülse und der Klemmhülse eingeklemmten Schlauchendes auch bei Schläuchen mit einer sehr glatten Schlauchoberfläche verhindern soll. Hierfür weist die Klemmhülse schlauchseitig, d.h. radial innen, definierte einzelne Bereiche mit erhöhter Reibung auf. Die erhöhte Reibung zwischen Klemmhülse und Schlauchoberfläche schafft eine sicherere Verbindung zwischen Klemmhülse und Schlauch und sorgt, dafür, dass die Klemmhülse, wenn der Schlauch unter Zugbelastung steht und sich das Schlauchende gegenüber der Innenhülse in Zugrichtung bewegt, mit dem Schlauch in Zugrichtung mitgeführt wird, und zwar unabhängig vom Schlauchmaterial, also auch wenn das Schlauchmaterial glatt oder steif ist. Durch die Mitnahme der Klemmhülse mit dem Schlauchende in Zugrichtung erhöht sich die Klemm- und Reibwirkung zwischen den Erhöhungen und Vertiefungen von Klemmhülse und Innenhülse und es ergibt sich eine balgartige Verformung des Schlauchmaterials. Eine ansteigende Zugbelastung des Schlauchs führt somit zu einer anfänglichen Bewegung des Systems Schlauch-Klemmhülse-Aussenhülse, die über eine zunehmende Reibung im Sinne einer Reibungseskalation schliesslich eine verstärkte Fixierung bewirkt und somit einem Abziehen des Schlauchs von der Innenhülse entgegenwirkt.

Die reibungserhöhende Ausgestaltung der Oberfläche der Klemmhülseninnenseite ist auf den dichtenden Bereich zwischen Klemmhülse und Innenhülse beschränkt, wobei der dichtende Bereich jener Bereich ist, in dem sich in montiertem Zustand Erhöhungen und Nuten von Klemmhülse und Innenhülse passgenau ineinandergreifend gegenüberliegen. Die reibungserhöhende Ausgestaltung der Oberfläche ist auf der Innenseite der Klemmhülse, primär auf die radial innen liegenden Stirnflächen der Erhöhungen der Klemmhülse beschränkt. Sie kann realisiert sein durch sägezahnartig radial nach innen hervorstehende und sich in Umfangsrichtung erstreckende feine Zähne (so genannte Feinverzahnung) oder durch feine Metall- oder Kunststoffnetze, die auf die Stirnseiten der Erhöhungen aufgebracht sind, oder den Einschluss feiner Sand- oder Metallpartikel in die Oberfläche dieser Stirnseiten. Die Rauhigkeit die durch diese Massnahmen bewirkt wird, erzeugt eine Wechselwirkung mit dem Schlauch, die unterhalb der makroskopischen Verformbarkeit des Schlauchmaterials liegt, so dass dieser nicht beschädigt oder durch die Reibungselemente in makroskopischer Weise verformt wird.

Diese Art der Schlauchkupplung und insbesondere der Schlauchklemmvorrichtung für die Befestigung der Kupplungselemente an den Schlauchenden hat sich über lange Zeit bewährt. Neue Schlauchmaterialien zeigen aber immer neue Eigenschaften und erlauben die Herstellung von Schläuchen mit immer geringeren Manteldicken oder auch von Schläuchen mit sehr leichten aber dicken Mänteln. Die aus dem Stand der Technik bekannten Schlauchkupplungen mit den bekannten Schlauchklemmvorrichtungen vermögen hier oft keine befriedigende Lösung mehr zu schaffen, da für ein sicheres Funktionieren, sprich für eine dichte und sichere Fixierung des Schlauchs in der Klemmvorrichtung auch unter hohen Zugkräften, bei den Schlauchkupplungen gemäss Stand der Technik die Dicke des eingeklemmten Schlauchmantels in einem definierten Bereich liegen muss. Liegt die Manteldicke darunter kann ein sicheres Festklemmen des Schlauchendes unter hohen Zugbeanspruchungen nicht gewährleistet werden und die Schlauchklemmvorrichtung wird undicht oder das Schlauchende rutscht sogar ganz aus der Schlauchklemmvorrichtung. Die Feinverzahnung der Klemmhülse aus DE 201 13 434 U1 kann zum Beispiel nicht wirksam werden, wenn die Manteldicke zu dünn ist oder die Zähne an einer zu glatten Oberfläche abgleiten. Ist die Manteldicke dagegen zu gross, kann die Aussenhülse nicht mehr von Hand sondern nur noch mit maschineller Unterstützung oder gar nicht mehr über die Klemmhülse geschoben bzw. geschraubt werden, was den flexiblen Einsatz vor Ort behindert oder ganz verunmöglicht. Bisher konnte dem nur begegnet werden, indem man - angepasst an die verschiedenen Manteldicken und Manteleigenschaften - verschiedene Schlauchklemmvorrichtungen vorrätig hielt. Das aber führt zu hohen Lagerkosten. Alternativ dazu kann sich der Nutzer auf Jahre hinaus auf bestimmte Schläuche in Kombination mit bestimmten Schlauchkupplungen bzw. Schlauchklemmvorrichtungen festlegen, was für den Nutzer ebenfalls nicht wünschenswert ist.

Aufgabe der vorliegenden Erfindung ist es daher, eine Schlauchkupplung bzw. eine Schlauchklemmvorrichtung zur Verfügung zu stellen, die eine sichere Verbindung des Schlauches mit dem Kupplungselement einer Schlauchkupplung gewährleistet unabhängig von Manteldicke und Manteleigenschaften des einzuklemmenden Schlauches.

Diese Aufgabe wird durch eine Schlauchkupplung bzw. ein Kupplungselement bzw. eine Schlauchklemmvorrichtung bzw. eine Klemmhülse für eine solche Schlauchklemmvorrichtung oder Schlauchkupplung sowie ein Verfahren zur Befestigung eines Schlauchendes in einer Schlauchklemmvorrichtung gemäss den unabhängigen Ansprüchen gelöst. Merkmale, welche die Erfindung in alternativer oder vorteilhafter Weise weiterbilden, sind den abhängigen Patentansprüchen zu entnehmen.

Eine erfindungsgemässe Klemmhülse ist dazu ausgebildet in montiertem Zustand einen Bestandteil einer Schlauchklemmvorrichtung zu bilden und dabei mit einer Innenhülse der Schlauchklemmvorrichtung zusammenzuwirken. Die Innenhülse dient ihrerseits dazu, in montiertem Zustand ein Schlauchende radial innen abzustützen, wobei die Klemmhülse im montierten Zustand radial aussen auf dem Schlauchende angeordnet ist, und mittels einer Aussenhülse gegen das Schlauchende und die Innenhülse pressbar ist. Dabei bilden Klemmhülse und Innenhülse in ihrem Zusammenwirken einen dichtenden Bereich aus, in welchem Erhöhungen und Vertiefungen von Klemmhülse und Innenhülse mit dazwischen liegendem Schlauchmantel ineinander greifen, und einen nicht dichtenden Bereich, in welchem eine Stirnseite des Schlauchendes zu liegen kommt. Im nicht dichtenden Bereich ist die Klemmhülse erfindungsgemäss mit Halteelementen versehen, die derart ausgestaltet sind, dass sie in montiertem Zustand eine Eindringposition einnehmen, in welcher sie von radial aussen in den Schlauchmantel des Schlauchendes eingedrungen vorliegen und sozusagen darin festkrallen.

Durch die in den Schlauchmantel eingedrungenen Haltelemente ist die Klemmhülse in montiertem Zustand fest mit dem Schlauchende verbunden. Bewegt sich das Schlauchende unter Zugbelastung tendenziell aus der Schlauchklemmvorrichtung hinaus, wird die Klemmhülse zunächst von dem Schlauchende mitgenommen, bis sich der Schlauchmantel zwischen den Erhöhungen und Vertiefungen von Innenhülse und Klemmhülse so weit balgartige verformt hat, dass die Bewegung in Zugrichtung gestoppt wird. Eine ansteigende Zugbelastung des Schlauchs führt somit unabhängig von der Höhe der im dichtenden Bereich ursprünglich herrschenden Klemm- und Reibwirkung zu einer anfänglichen Bewegung des Systems Schlauch-Klemmhülse-Aussenhülse, die über eine makroskopische Verwerfung des Schlauchmaterials schliesslich eine verstärkte Fixierung bewirkt und somit einem Abziehen des Schlauchs von der Innenhülse entgegenwirkt.

Die Klemmhülse ist vorzugsweise in axialer Richtung wechselseitig mit Einschnitten versehen so dass sie einen über einem bestimmten Bereich flexiblen Durchmesser aufweisst und über diesen Durchmesserbereich zusammengedrückt bzw. aufgeweitet werden kann. Dies macht ihren Einsatz zusammen mit Schläuchen unterschiedlicher Schlauchmanteldicke flexibler einsetzbar und ermöglicht auch ein leichteres zusammenpressen mit Hilfe der Aussenhülse gegen Schlauchmantel und Innenhülse.

Besonders vorteilhaft ist es, wenn die Halteelemente der Klemmhülse in Umfangsrichtung gleichmässig verteilt angeordnet sind, da sich so die zu übertragende Zugkraft gleichmässig vom Schlauchende auf die Klemmhülse überträgt und auch die Belastung des Materials des Schlauchmantels gleichmässig verteilt wird.

Besonders einfach und kostengünstig ist es, eine Klemmhülse herzustellen, die nur eine Reihe von Halteelementen im nicht dichtenden Bereich aufweist.

Für die Verteilung der wirkenden Kräfte ist es vorteilhaft, wenn im nicht dichtenden Bereich der Klemmhülse zwei oder mehr Reihen von Halteelementen vorgesehen sind. Für die Herstellung ist es hier vorteilhaft, wenn die Halteelemente in Achsrichtung betrachtet in einer Linie angeordnet sind. Bezüglich der Belastung des Schlauchmaterials ist es vorteilhaft, wenn die Reihen der Halteelemente versetzt zueinander angeordnet sind.

Die Ausgestaltung der Halteelemente erfolgt vorzugsweise in einer Form, die das Eindringen der Halteelemente in das Schlauchmaterial und ihr dortiges Verbleiben unter Zugbeanspruchung möglichst begünstigt. So können die Halteelemente beispielsweise nagelartig und/oder nadelartig und/oder keilförmig und/oder in Form von Sägezähnen und/oder spitzen Kegeln ausgestaltet sein.

Die Halteelemente sind sowohl in axialer Richtung betrachtet als auch in Umfangsrichtung betrachtet sehr schmal, um das Eindringen in den Schlauchmantel zu vereinfachen. So nehmen beispielsweise zwölf gleichmässig entlang des Umfangs verteilte Halteelemente nur etwa 10% des Umfanges ein. Das Verhältnis von axialer Ausdehnung zur Ausdehnung in Umlaufrichtung bewegt sich dabei etwa in einem Bereich von 1:2 bis 2:1. Die Halteelemente sind insgesamt, aber insbesondere auch was ihre Länge bzw. Ausdehnung nach radial innen anbelangt, so ausgebildet, dass sie in montiertem Zustand mindestens zu 45% bis 50% bezogen auf die Manteldicke des Schlauchmantels in diesen eindringen. Vorteilhafter ist es allerdings, wenn eine grössere Eindringtiefe beispielsweise von 80% bis 90% erreicht wird.

Die Klemmhülse umfasst einen vorzugsweise einstückig ausgebildeten Körper sowie den bereits genannten dichtenden Bereich mit den Erhöhungen und Vertiefungen, den nicht dichtenden Bereich und die Halteelemente im nicht dichtenden Bereich. In einer möglichen Ausführungsform der Klemmhülse sind die Halteelemente einstückig mit dem Körper der Klemmhülse ausgebildet. Dies reduziert die Herstellungskosten der Klemmhülse.

In einer anderen, vorteilhaften Ausgestaltung sind die Halteelemente selber separate Bauteile oder sie sind Bestandteil eines oder mehrerer vom Körper der Klemmhülse separate(r/n) Bauelemente(s). Dies erlaubt eine flexible, auf jeweilige Bedürfnisse angepasste Ausgestaltung der Klemmhülse. Das/die separate(n) Bauelement(e) können mit unterschiedlich ausgestalteten Halteelementen versehen sein und der Körper der Klemmhülse kann abhängig von den Eigenschaften des zu verwendenden Schlauches und den zu erwartenden Drücken mit dem/den Bauelement(en) mit den am besten geeigneten Halteelementen zu einer Klemmhülse verbunden werden. Am Einfachsten lässt sich dies realisieren, wenn das oder die Bauelement(e) mit Hilfe eines Schnappmechanismus oder Klickmechanismus mit dem Körper der Klemmhülse verbindbar ist/sind.

In einer bevorzugten Ausführungsform sind die Halteelemente Bestandteil eines Halteelementrings, der in montiertem Zustand in jenem axialen Bereich der Klemmhülse angeordnet ist, der den nicht dichtenden Bereich bildet. Im montierten Zustand ist der Halteelementring vom Körper der Klemmhülse radial aussen wenigstens teilweise umgriffen ist, so dass er im montierten Zustand zusammen mit dem Körper der Klemmhülse mittels der Aussenhülse gegen den Schlauch und die Innenhülse gepresst vorliegt, so dass die Halteelemente eingedrungen in den Schlauchmantel vorliegen.

In einer vorteilhaften Ausgestaltung ist der Halteelementring mittels eines Schnappmechanismus mit dem Körper der Klemmhülse verbunden, was Montage und Demontage erleichtert.

Wie der Körper der Klemmhülse, so kann auch der Halteelementring in axialer Richtung wechselseitig mit Einschnitten versehen sein, so dass er einen über einem bestimmten Bereich flexiblen Durchmesser aufweisst und über diesen Durchmesserbereich zusammengedrückt bzw. aufgeweitet werden kann.

Um die Montage des Schlauchendes in der Schlauchklemmvorrichtung und eine mögliche Demontage zu vereinfachen, ist es vorteilhaft, wenn die Halteelemente radial verschwenkbar im Körper der Klemmhülse gelagert sind. Hierzu ist es besonders vorteilhaft, wenn die Halteelemente um eine senkrecht zur Längsausrichtung des Schlauches angeordnete Schwenkachse radial verschwenkbar sind. Für ein besonders leichtes, widerstandsfreies Verschwenken kann im Bereich der Schwenkachse eine im Körper der Klemmhülse gelagerte Welle vorgesehen sein, an welcher die Halteelemente direkt oder indirekt radial verschwenkbar gelagert sein können.

Ebenfalls günstig für die Montage bzw. Demontage des Schlauchendes in der Schlauchklemmvorrichtung ist es, wenn das oder die separaten Bauelemente mit den Halteelementen in radialer Richtung verschiebbar gelagert ist/sind.

Sind die Halteelemente mittels Federkraft aus einer radial inneren Eindringposition in eine radial äussere freie Position bewegbar, so erleichtert dies die Demontage erheblich.

In einer anderen, besonderen Ausführungsform sind die Halteelemente Bestandteil von Halteelementköpfen. Die Halteelementköpfe sind im nicht dichtenden Bereich vorzugsweise mittels eines Klickmechanismus in den Körper der Klemmhülse eingeklickt und so dort befestigt. Dabei kann das Einklicken so erfolgen, dass sich eine relativ steife Verbindung zwischen Halteelementköpfen und Klemmelementkörper ergibt, oder aber derart, dass die Halteelementköpfe um eine Schwenkachse radial verschwenkbar ist oder die Halteelementköpfe werden in bzw. an im Körper der Klemmhülse gelagerte Wellen eingeklickt/angeklickt, um welche sie dann radial schwenkbar ist, oder das Einklicken erfolgt derart, dass sich ein Verschiebemechanismus ergibt, der ein radiales verschieben der Halteelementköpfe nach innen und aussen ermöglicht.

Wie aus dem vorhergehenden hervorgeht, ist eine Klemmhülse mit Haltelementen im nicht dichtenden Bereich, welche so konfiguriert sind, dass sie durch die Montage von radial aussen ins Mantelmaterial des Schlauchendes eindringen und in montiertem Zustand wenigstens bis zu einer vordefinierten Tiefe eingedrungen im Mantelmaterial des Schlauchendes vorliegen und auf diese Weise das Schlauchende fest mit der Klemmhülse verbinden, sehr vorteilhaft, wenn es darum geht, verschiedene Schläuche in einer Schlauchklemmvorrichtung einer Schlauchkupplung zu befestigen. Dabei ist es insbesondere vorteilhaft, wenn die Schlauchkupplung bzw. die einzelnen Kupplungselemente der Schlauchkupplung erfindungsgemäss mit einer erfindungsgemässen Schlauchklemmvorrichtung versehen sind, wobei die Schlauchklemmvorrichtung eine erfindungsgemässe Klemmhülse aufweist.

Um ein Schlauchende in einer solchen Schlauchkupplung, bzw. dem Kupplungselement einer solchen Schlauchkupplung bzw. der Schlauchklemmvorrichtung der Schlauchkupplung zu befestigen, wird das Schlauchende radial aussen auf die Innenhülse gezogen bzw. gestossen. Dann wird die Klemmhülse radial aussen über das Schlauchende bewegt und mittels einer Aussenhülse gegen das Schlauchende und die Innenhülse gepresst. Dies geschieht in der Regel dadurch, dass die Aussenhülse axial in Richtung Stirnseite des Schlauchendes über die Klemmhülse, das Schlauchende und die Innenhülse bewegt wird. Hierbei wird das Schlauchende zwischen der Klemmhülse und der Innenhülse in einem nicht dichtenden Bereich, der im Bereich der Stirnseite des Schlauchendes liegt, nicht dichtend eingeklemmt und im axial daran angrenzenden dichtenden Bereich dichtend eingeklemmt. Dichtend wird das Schlauchende insbesondere zwischen Erhöhungen und Vertiefungen von Innenhülse und Klemmhülse eingeklemmt, welche so ausgebildet sind, dass sie in montiertem Zustand ineinandergreifen. Im nicht dichtenden Bereich der Klemmhülse angeordnete Halteelemente werden durch das axiale Bewegen der Aussenhülse über die Klemmhülse radial gegen das Schlauchende gepresst, so dass sie ins Schlauchmaterial des Schlauchendes eindringen und dieses zugfest mit der Klemmhülse verbinden.

Die Erfindung wird nachfolgend anhand von in den Zeichnungen schematisch dargestellten, konkreten Ausführungsbeispielen rein beispielhaft näher beschrieben, wobei auch auf weitere Vorteile der Erfindung eingegangen wird. Die Abbildungen sind nicht massstabsgetreu und einzelne Elemente können für eine bessere Kenntlichmachung unverhältnismässig gross oder klein dargestellt sein. Gleiche Elemente sind in den Figuren mit gleichen Bezugszeichen gekennzeichnet. Im Einzelnen zeigen die Figuren rein schematisch:
- Fig.1: eine erfindungsgemässe Schlauchkupplung umfassend zwei Kupplungselemente, jeweils ausgestattet mit einer Schlauchklemmvorrichtung mit Innenhülse, Klemmhülse und Aussenhülse, dargestellt mit über die Innenhülse gezogenen Schlauchenden jeweils im Längsschnitt zur Schlauchachse;
- Fig.2a: eine erfindungsgemässe Klemmhülse in axialer Ansicht;
- Fig. 2b: die Klemmhülse aus Figur 2a in radialer Draufsicht;
- Fig. 2c: vergrössert einen Teil der Klemmhülse aus Figur 2a in einem Schnitt in axialer Richtung;
- Fig. 2d: die Klemmhülse aus Figur 2a eingebaut in der Schlauchklemmvorrichtung eines Kupplungselements;
- Fig.3a: einen Ausschnitt einer weiteren Ausführungsform einer erfindungsgemässen Klemmhülse im Längsschnitt in axialer Richtung;
- Fig. 3b: die Klemmhülse aus Figur 3a eingebaut in der Schlauchklemmvorrichtung eines Kupplungselements;
- Fig.4a: im Längsschnitt in axialer Richtung einen Ausschnitt einer weiteren Ausführungsform einer erfindungsgemässen Klemmhülse mit erfindungsgemässem Halteelement im Zusammenwirken mit Elementen einer Schlauchklemmvorrichtung in einer Position vor der fertigen Montage;
- Fig. 4b: in gleicher Darstellung wie in Figur 4a die Klemmhülse aus Figur 4a in einer Eindringposition nach abgeschlossener Montage;
- Fig.5: noch eine Ausführungsform einer erfindungsgemässen Klemmhülse in einer Darstellung analog zur Darstellung in Figur 2c;
- Fig.6: eine weitere Ausführungsform einer erfindungsgemässen Klemmhülse in einer Darstellung analog zur Darstellung in Figur 2c;
- Fig.7: noch eine Ausführungsform einer erfindungsgemässen Klemmhülse in einer Darstellung analog zur Darstellung in Figur 2c;
- Fig. 8a: noch eine Ausführungsform einer erfindungsgemässen Klemmhülse in einer Darstellung analog zur Darstellung in Figur 2c;
- Fig. 8b: die Klemmhülse aus Figur 8a in axialer Ansicht;
- Fig. 8c: die Klemmhülse aus Figur 8a in perspektivischer Ansicht; und
- Fig. 8d: die Klemmhülse aus Figur 8a eingebaut in einer Schlauchklemmvorrichtung eines Kupplungselements.

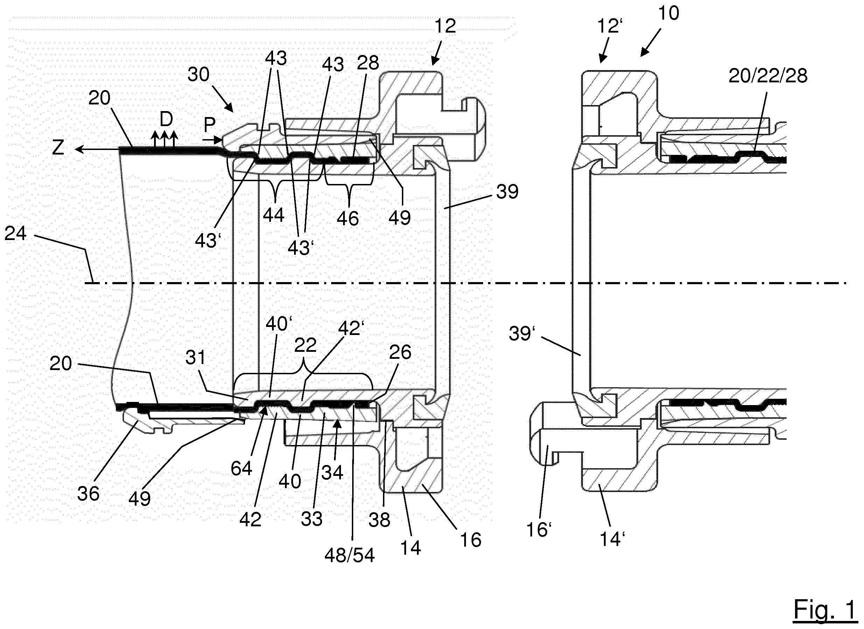

Figur 1 zeigt eine Schlauchkupplung 10 mit einem ersten Kupplungselement 12 und einem Ausschnitt eines zweiten Kupplungselements 12'. Jedes der Kupplungselemente 12, 12' weist einen Kupplungsring 14, 14' auf, wobei jeder Kupplungsring 14, 14' in dem hier gezeigten Beispiel mit einer Hälfte eines Bajonettverschlusses 16, 16' versehen ist, so dass die Kupplungselemente 12, 12' der Schlauchkupplung 10 mittels Bajonettverschluss 16, 16' lösbar fest miteinander verbunden werden können. Statt des Bajonettverschlusses 16, 16' wären auch eine Schraubverbindung oder andere geeignete Verbindungsarten denkbar, um die beiden Kupplungsringe 14, 14' und somit die beiden Kupplungselemente 12, 12' miteinander zu verbinden. Die Kupplungselemente 12, 12' sind in diesem Beispiel jeweils dazu ausgebildet mit einem Schlauchende 22 eines Schlauches 20 verbunden zu werden. Stattdessen könnte eines der Kupplungselemente oder auch nur der eine Kupplungsring dazu ausgebildet sein, an einen Anschluss, wie beispielsweise einen Wasseranschluss, Gasanschluss oder den Anschluss eines Kompressors angeschlossen zu werden, um dann mit einem Kupplungselement verbunden zu werden, das mit einem Schlauchende verbunden ist.

Die Schlauchkupplung 10 mit ihren Kupplungselementen 12, 12' und die Schläuche 20 sind im Schnitt entlang ihrer Längsachse 24, auch als Schlauchachse 24 bezeichnet, dargestellt. Die Kupplungselemente 12, 12' umfassen neben den Kupplungsringen 14, 14' je eine Schlauchklemmvorrichtung 30 (vgl. linke Seite in Figur 1). Für die weiteren Erklärungen wird auf das in Figur 1 links dargstellte Kupplungselement 16 Bezug genommen, wobei unten in Figur 1 die Schlauchklemmvorrichtung 30 dieses Kupplungselementes 12 während der Montage - bei welcher der Schlauch 20 nicht unter Druck steht - dargestellt ist, während oben in Figur 1 die Schlauchklemmvorrichtung 30 in fertig montiertem Zustand, das Schlauchende 22 einklemmend und der Schlauch 20 unter Druck stehend dargestellt ist.

Die Schlauchklemmvorrichtung 30 weist eine Innenhülse 31, eine Klemmhülse 34 und eine Aussenhülse 36 auf. Die Klemmhülse 34 umfasst einen Körper 33 und Haltelemente 48. Sie ist in axialer Richtung wechselseitig mit Einschnitten versehen (hier nicht dargestellt), so dass sie einen über einem bestimmten Bereich flexiblen Durchmesser aufweisst und über diesen Durchmesserbereich zusammengedrückt bzw. aufgeweitet werden kann. Die Innenhülse 31 ist in diesem Beispiel über eine Schraubverbindung 38 mit dem Kupplungsring 14 lösbar fest verbunden. Auch hier sind andere gängige Verbindungen anstelle der Schraubverbindung 38 denkbar. An ihrer Stirnseite weist die Innenhülse 31 eine Nut zur Aufnahme einer Ringdichtung 39 auf, die dem Abdichten der Verbindungsstelle zwischen den Kupplungselementen 12, 12' dient. Alternativ oder zusätzlich könnte auch der Kupplungsring 14 mit einer diesem Zweck dienenden Ringdichtung versehen sein.

Klemmhülse 34 und Innenhülse 31 der Schlauchklemmvorrichtung 30 weisen in Umfangsrichtung verlaufende Vertiefungen 40, 40', auch als Ringnuten bezeichnet, und in Umfangsrichtung verlaufende Erhöhungen 42, 42' auf, die gegengleich ausgebildet sind und in montiertem Zustand ineinander greifen, wobei der Schlauch 20 in montiertem Zustand im Bereich seines Schlauchendes 22 mit seinem Mantel 28 zwischen Klemmhülse 34 und Innenhülse 31 eingeklemmt ist. Die Erhöhungen 42, 42' und Vertiefungen 40, 40' weisen jeweils axial oder leicht geneigt zur Achsrichtung 24 ausgerichtete Seitenflanken 43, 43' auf. Die Seitenflanken 43, 43' werden in montiertem Zustand gegeneinander gepresst und klemmen den Schlauchmantel 28 dichtend zwischen sich ein. Im Zusammenwirken bilden Innenhülse 31 und Klemmhülse 34 daher im montierten Zustand in jenem axialen Abschnitt, der die Erhöhungen 42, 42' und Ringnuten 40, 40' aufweist, einen dichtenden Bereich 44. In dem sich axial in Richtung einer Schlauchstirnseite 26 anschliessenden Abschnitt ohne Erhöhungen 42, 42' und Ringnuten 40, 40' entsteht dagegen keine dichtende Wirkung. Dieser Bereich wird daher als nicht dichtender Bereich 46 bezeichnet.

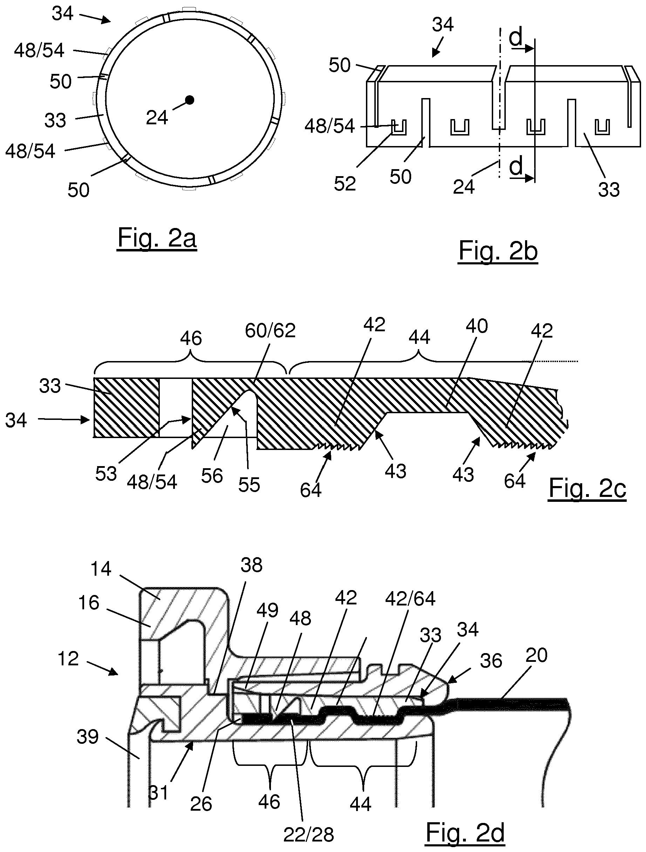

Im nicht dichtenden Bereich 46 weist die Klemmhülse 34 erfindungsgemäss Halteelemente 48 auf, die in montiertem Zustand in einer Eindringposition vorliegen in welcher sie in den Schlauchmantel 28 eingedrungen vorliegen oder je nach Dicke des Schlauchmantels 28 diesen auch durchdrungen haben können. In dem hier gezeigten Beispiel sind die Halteelemente 48 in Form von schmalen Sägezähnen 54 ausgebildet, die radial nach innen vorstehen (vgl. auch Fig. 2a bis 2d). Die Halteelemente 48 sind gleichmässig über den Umfang verteilt in einer Reihe oder abwechseln zueinander versetzt angeordnet.

Die dichtende Klemmung zwischen den Seitenflanken 43, 43' erhöht sich sobald der Schlauch 20 unter Druck steht, da dann der Schlauchmantel 28 radial nach aussen gedrückt wird (Pfeile D), wodurch einerseits eine axiale Zugkraft (Pfeil Z) auf den Schlauchmantel 28 wirkt, die ihn tendenziell aus der Schlauchklemmvorrichtung 30 herauszieht, andererseits aber eine entgegengesetzt wirkende Druckkraft P auf die Aussenhülse 36 einwirkt, die ein unbeabsichtigtes Öffnen der Schlauchklemmvorrichtung 30 verhindert. Mittels der Haltelemente 48, die im nicht dichtenden Bereich 46 in den Schlauchmantel 28 eingedrungen und sozusagen in diesen verkrallt vorliegen, wird aber die Zugkraft Z vom Schlauch 20 auf die Klemmhülse 34 übertragen, so dass bei einer axialen Bewegung des Schlauches 20 in Richtung Z die Klemmhülse 34 mitgenommen wird. Auf diese Weise erhöhen sich der Anpressdruck und die Reibung, welche die Seitenflanken 43, 43' der Erhöhungen 42, 42' und Vertiefungen 40, 40' im dichtenden Bereich 44 gegeneinander und auf den Schlauchmantel 28 ausüben, wodurch sich der Schlauchmantel 28 balgartig verformt, was in einer höheren Dichtigkeit und einer grösseren Klemmung resultiert und ein Herausrutschen des Schlauchendes 22 aus der Schlauchklemmvorrichtung 30 verhindert. Da die Haltelemente 48 so ausgestaltet sind, dass sie unabhängig von der Dicke und der Oberflächenbeschaffenheit des Schlauchmantels 28 immer in diesen eindringen und sich sozusagen in diesem festkrallen, ist für alle Arten von Schläuchen gewährleistet, dass das Schlauchende 22 nicht aus der Schlauchklemmvorrichtung 30 herausrutschen kann und, dass der oben beschriebene Mechanismus der sich unter Druck selbst erhöhenden Dichtigkeit und Klemmung wirken kann.

Zur Befestigung des Schlauchendes 22 in der Schlauchklemmvorrichtung 30 des Kupplungselementes 16 werden zunächst Aussenhülse 36 und Klemmhülse 34 von einer Stirnseite 26 des Schlauches 20 her über das Schlauchende 22 auf den Schlauch 20 geschoben. Das Schlauchende 22 wird dann radial aussen auf die Innenhülse 31 gestossen bzw. gezogen. Die Innenhülse 31 kann, entweder jetzt oder nachdem der Schlauch 20 in der Schlauchklemmvorrichtung 30 festgeklemmt wurde, mit dem Kupplungsring 14 verbunden werden; in diesem Beispiel verschraubt werden. Die Klemmhülse 34 wird von der Schlauchseite her axial in Richtung Schlauchstirnseite 26 geschoben und dabei radial aussen über das Schlauchende 22 bewegt bis zu einem Anschlag 32, welchen die Innenhülse 31 hier bildet (Situation in Figur 1 unten). Die Aussenhülse 36 wird, entweder gleichzeitig mit der Klemmhülse oder nachdem die Klemmhülse bis zum Anschlag 32 bewegt wurde, ebenfalls axial in Richtung Schlauchstirnseite 26 bis zum Anschlag 32 bewegt (hierfür kann auch ein Schraubmechanismus vorgesehen sein) und radial aussen über die Klemmhülse 34, wodurch die Klemmhülse 34 mit einer radial nach innen wirkenden Kraft beaufschlagt wird und der Schlauchmantel 28 des auf der Innenhülse 31 aufliegenden Schlauchendes 22 zwischen Klemmhülse 34 und Innenhülse 31 eingeklemmt wird (Situation in Figur 1 oben). Die im nicht dichtenden Bereich vorgesehenen Halteelemente 48 werden dabei in den Schlauchmantel 28 gedrückt, so dass sie in diesen eindringen oder ihn sogar durchdringen und auf diese Weise das Schlauchende 20 in der Schlauchklemmvorrichtung 30 festhalten.

In einer besonderen Ausführungsform ist die Aussenhülse 36 mit einer konisch ausgebildeten Innenfläche 49 versehen, die beim Aufschieben der Aussenhülse 36 auf die Klemmhülse 34 mit einer entweder ebenfalls konisch ausgebildeten oder auch zylindrischen Aussenfläche des Klemmrings 34 zusammenwirkt, so dass mit zunehmender axialer Bewegung auch der Druck, mit dem die Klemmhülse 34 und die Halteelemente 48 gegen den Schlauchmantel 28 des Schlauchendes 22 und gegen die Innenhülse 31 gepresst werden, zunimmt.

In den Figuren 2a bis 2d ist eine erfindungsgemässe Klemmhülse 34 mit ihrem Körper 33 und mit erfindungsgemäss im nicht dichtenden Bereich 46 angeordneten Halteelementen 48 in verschiedenen Ansichten dargestellt. Gut erkennbar sind in den Figuren 2a und 2b die wechselseitigen axialen Einschnitte 50, die es ermöglichen die Klemmhülse 34 über einen gewissen Bereich ihres Durchmessers zusammenzudrücken bzw. aufzuweiten. Die hier gezeigten Halteelemente 48 sind einstückig mit der Klemmhülse 34 in Form von Sägezähnen 54 ausgebildet und gleichmässig über den Umfang verteilt in einer Reihe angeordnet. Die Sägezähne 54 sind sehr schmal, sie nehmen in ihrer Gesamtheit, das heisst alle Sägezähne 54 zusammen nur etwa 10% des Umfanges ein. Klemmhülse 34 und Sägezähne 54 sind in diesem Beispiel einstückig beispielsweise durch Spritzgiessen hergestellt und allenfalls nachbearbeitet. Als Material kommen bevorzugt Kunststoffe, wie Polyurethan, Polyamid, und insbesondere Nylon sowie faserverstärkte Varianten dieser Kunststoffe in Frage.

Damit die Haltelemente 48 für eine leichtere Montage und Demontage in radialer Richtung schwenkbar sind, sind sie durch eine u-förmige durchgehende Öffnung 52 vom Körper 33 der Klemmhülse 34 getrennt. Die u-förmige durchgehende Öffnung 52 erstreckt sich auf zwei Seiten des Sägezahns 54 in axialer Richtung und stirnseitig quer zur Achse 24. Stirnseitig bedeutet hierbei, auf jener Seite der Klemmhülse 34, auf der in montiertem Zustand die Stirnseite 26 des Schlauchendes 20 liegt bzw. der Kupplungsring 14 angeordnet ist. Die entgegengesetzte Seite wird im Weiteren als schlauchseitig bezeichnet. Jeder Sägezahn 54 ist stirnseitig von einer sich etwa radial erstreckenden Flanke 53 begrenzt, während er schlauchseitig durch eine entsprechend gegen die Achse 24 geneigte oder konkav gekrümmte Flanke 55 begrenzt ist Die schlauchseitige Flanke 55 ist durch eine Materialaussparung 56 vom Körper 33 der Klemmhülse getrennt, die radial aussen einen Steg 60 als Verbindung zwischen Sägezahn 54 und Körper 33 der Klemmhülse 34 übrig lässt. Auf diese Weise ist jeder Sägezahn 54 schlauchseitig über den dünnen, sich quer zur Achse 24 erstreckenden Steg 60 mit der dem Körper 33 der Klemmhülse 34 verbunden, wobei der Steg 60 als Schwenkachse 62 dient ähnlich einem Scharnier. Im dichtenden Bereich 44 weist die Klemmhülse 34 Erhöhungen 42 und Vertiefungen 40 auf die sich vorzugsweise jeweils durchgehend in Umfangrichtung erstrecken und durch Seitenflanken 43 miteinander verbunden sind. Die Erhöhungen 42 weisen, wie dies aus dem Stand der Technik bekannt ist, zur Reibungserhöhung eine Feinverzahnung 64 auf.

Das Verschwenken in radialer Richtung vereinfacht die Montage, da die Halteelemente 48/54 während des Aufbringens auf den Schlauchmantel 28 des durch die Innenhülse 31 abgestützten Schlauchendes 22 nach radial aussen ausweichen. Sobald sie aber bei der Montage mit radialem Druck von aussen beaufschlagt werden, dringen die Haltelemente 48 aufgrund ihrer schmalen Sägezahnform und ihrer radial nach innen vorstehenden Spitzen leicht in den Schlauchmantel 28 ein, so dass auch das Aufbringen der Aussenhülse über die Klemmhülse ohne allzu grossen Widerstand möglich ist. Durch ihre spezielle Form dringen die Halteelemente 48 also während der Montage leicht in den Schlauchmantel ein, während sie bei Zugbeanspruchung des Schlauches 20 ähnlich eines Widerhakens im Schlauchmantel 28 verankert bleiben und einen guten Widerstand gegen das Herausrutschen des Schlauchendes 22 aus dem Schlauchklemmvorrichtung 30 bieten.

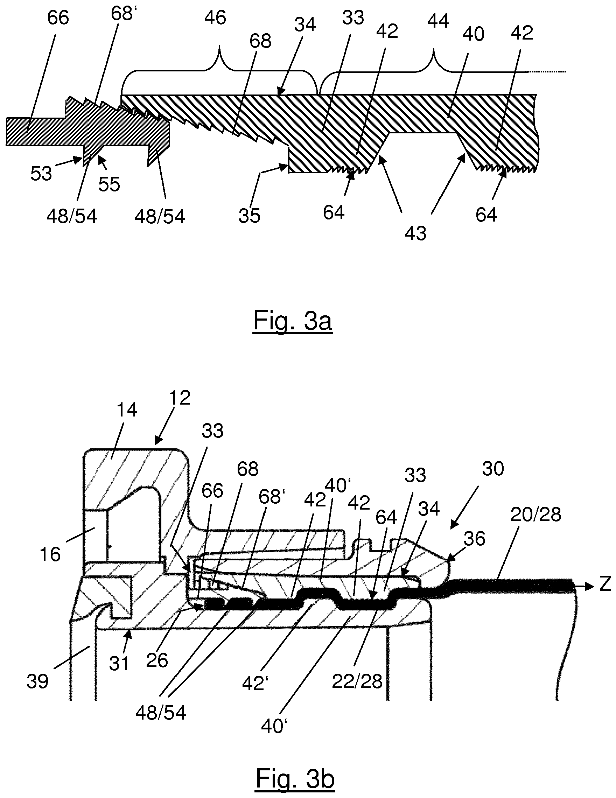

In den Figuren 3a und 3b ist eine weitere Ausführungsform einer erfindungsgemässen Klemmhülse 34 einmal während und einmal nach abgeschlossener Montage dargestellt. Die Klemmhülse 34 ist sehr ähnlich ausgebildet, wie diejenige, die in den Figuren 2a bis 2d gezeigt ist: Sie weist im dichtenden Bereich 44 Vertiefungen 40 und Erhöhungen 42 mit Feinverzahnung 64 auf und wirkt im nicht dichtenden Bereich mit Haltelementen 48 zusammen. Anders als in dem Beispiel aus den Figuren 2a bis 2d sind die Halteelemente 48 in diesem Beispiel aber Bestandteil eines zur Klemmhülse 34 gehörenden Haltelementrings 66, der stirnseitig mittels eines Schnappmechanismus 68, 68' mit dem Körper 33 der Klemmhülse 34 verbunden ist. Die Haltelemente 48 sind wiederum in Form von Sägezähnen 54 ausgebildet, wobei sich die stirnseitige Flanke 53 wieder radial erstreckt und die gegenüberliegende Flanke 55 geneigt zur Schlauhachse 24 ausgebildet ist. Im Unterschied zu dem Beispiel aus den Figuren 2a bis 2d sind die Halteelemente 48 hier in zwei parallelen Reihen angeordnet. Der Halteelementring 66 ist vorzugsweise aus dem gleichen Material gefertigt wie die Klemmhülse 34, wobei die Halteelemente 48 in diesem Beispiel einstückig mit dem Halteelementring 66 geformt sind. Der Körper 33 der Klemmhülse 34 weist stirnseitig einen Innenkonus mit sich in Umfangsrichtung erstreckenden Schnappzähnen 68 auf, während der Halteelementring 66 auf seiner der Stirnseite entgegengesetzten Seite einen Aussenkonus mit gegengleich ausgebildeten Schnappzähnen 68' aufweist.

Für die Montage (vgl. Figur 3c) wird zunächst der Halteelementring 66 zusammen mit dem Körper 33 der Klemmhülse 34, welche den Halteelementring 66 teilweise übergreift (vgl. Fig. 3b) bis zum Anschlag 32 der Innenhülse 31 über das Schlauchende 22 und die darunter liegende Innenhülse 31 geschoben. Anschliessend wird der Körper 33 der Klemmhülse 34 axial weiterbewegt bis zum Anschlag 33 der Innenhülse 34 bzw. bis der Halteelementring 66 mit einem Anschlag 35 des Körpers 33 der Klemmhülse 34 in Anschlag gelangt, wobei weitere Schnappzähne 68, 68' des Körpers 33 der Klemmhülse 36 und des Halteelementrings 66 ineinander schnappen. Die Aussenhülse 34 wird entweder zusammen mit der Klemmhülse 34 oder nachdem diese über das Schlauchende 22 und den Halteelementring 66 geschoben wurde bis zum Anschlag über die Klemmhülse 34 mit ihrem Halteelementring 66 bewegt, wobei die Klemmhülse 34 und als deren Bestandteil auch der Halteelementring 66 mit den Haltelementen 48 gegen den Schlauchmantel 28 und die Innenhülse 31 gepresst wird. Die Halteelemente 48 werden dadurch im nicht dichtenden Bereich 44 in den Schlauchmantel 28 hineingedrückt und dringen in diesen mindestens bis zu einer Tiefe von 45% bis 90% bezogen auf die Dicke des Schlauchmantels in diesen ein. Auf diese Weise schaffen die Halteelemente 48 eine feste Verbindung zwischen Schlauchmantel 28 und Klemmhülse 34, so dass sich bei Zugbeanspruchung des Schlauches 20 in Richtung Z die Klemmhülse 34 inklusive ihres Halteelementrings 66 mit dem Schlauch 20 in Richtung Z bewegt und der dichtende und festklemmende Mechanismus an den Flanken 43, 43' wirksam werden kann.

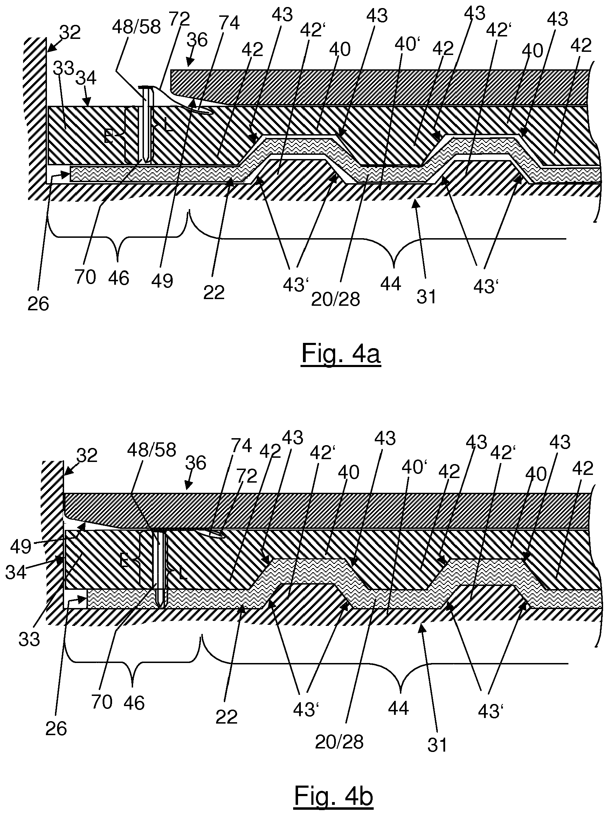

In den Figuren 4a, 4b ist eine weitere Ausführungsform einer erfindungsgemässen Schlauchklemmvorrichtung 30 mit einer erfindungsgemässen Klemmhülse 34 und erfindungsgemässen Halteelementen 48 dargestellt. Figur 4a zeigt die Schlauchklemmvorrichtung 30 vor der fertigen Montage, Figur 4b nach der Montage. Die Klemmhülse 30 ist wiederum sehr ähnlich aufgebaut, wie diejenige, die in den Figuren 2a bis 2d gezeigt ist: Sie weist im dichtenden Bereich 44 Vertiefungen 40 und Erhöhungen 42 auf, die über Flanken 43 miteinander verbunden sind und mit gegengleich ausgebildeten Vertiefungen 40', Erhöhungen 42' und Flanken 43' der Innenhülse 31 zusammenwirken. Im Gegensatz zur Klemmhülse aus den Figuren 2a bis 2d sind die Erhöhungen 42 der hier dargestellten Klemmhülse 34 nicht mit Feinverzahnungen oder anderen reibungserhöhenden Mitteln versehen. Dafür ist die Anzahl Erhöhungen 42, 42' und Vertiefungen 40, 40' hier grösser.

Die Haltelemente 48 sind wieder im nicht dichtenden Bereich 46 angeordnet. Sie liegen in Form von Metallstiften 58 vor, die in nicht montiertem Zustand in sich radial erstreckenden Durchgangsöffnungen 70 der Klemmhülse 34 untergebracht und dort durch ein Federelement 72 in einer freien Position gehalten sind (Figur 4a). Sie sind im nicht dichtenden Bereich 46 in zwei Reihen versetzt zueinander, gleichmässig verteilt entlang des Umfanges angeordnet. Die Haltelemente 48 sind als nagelartig geformte Metallstifte 58 ausgebildet, das heisst die Metallstifte 58 sind auf ihrer radial innen liegenden Seite zugespitzt. Ihre Länge L ist grösser als die radiale Dicke B der Klemmhülse 34 im Bereich der Durchgangsöffnung 70. Das Federelement 72 greift in diesem Beispiel an jenem der zugespitzten Seite gegenüberliegenden Ende des Metallstiftes 58, radial aussen an und ist auf seiner anderen Seite in einer dafür vorgesehenen Federaufnahme 74 der Klemmhülse 34 befestigt. Das Federelement 72 sorgt im nicht montierten Zustand dafür, dass das Halteelement 48 in der freien Position gehalten ist und radial nach aussen nicht aber radial nach innen über den Körper 33 der Klemmhülse 34 hinausragt. Federaufnahme 74 und Federelement 72 sind derart ausgestaltet, dass die Aussenhülse 36 mit ihrer konischen Innenfläche 49 bei de Montage einfach über sie hinweg geschoben werden kann, wobei die Aussenhülse 34 das Halteelement 48 radial nach innen drückt bis es radial innen über den Körper 33 der Klemmhülse 34 hinausragt. Dabei dringt es in den Schlauchmantel 28 ein bzw. durchdringt diesen sogar, wie hier dargestellt.

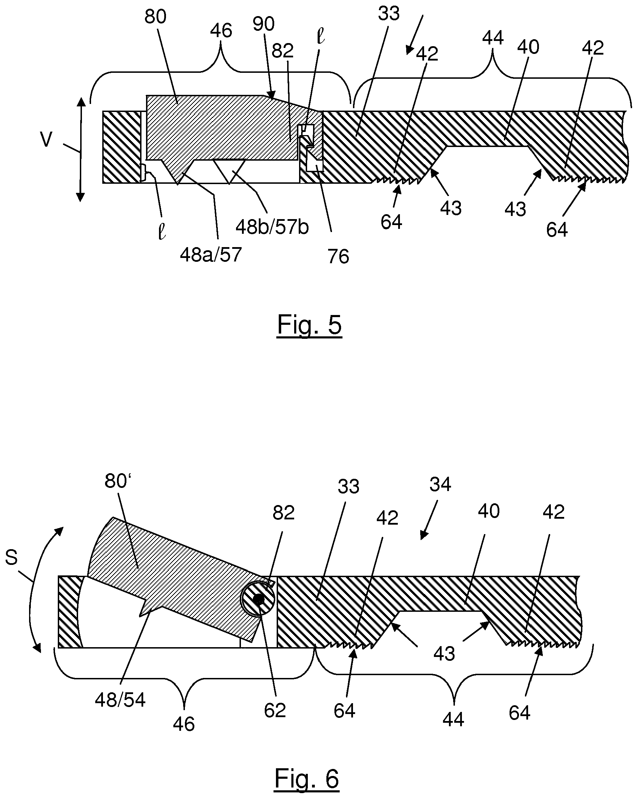

Figur 5 zeigt eine weitere Ausführungsform einer Klemmhülse 34, wobei hier nur ein stirnseitiger Abschnitt der Klemmhülse 34 im Längsschnitt analog zu den Figuren 2c und 3a gezeigt ist. Prinzipiell ist die Klemmhülse 34 wieder aufgebaut wie die bisher gezeigten Ausführungsform, insbesondere was den dichtenden Bereich 44 betrifft. Im nicht dichtenden Bereich 46 sind in dem hier gezeigten Beispiel gleichmässig über den Umfang verteilt Halteelementköpfe 80 mit je zwei versetzt zueinander angeordneten Halteelementen 48a (im Schnitt), 48b (seitliche Aufsicht) vorgesehen. Die Halteelemente 48a, 48b sind in diesem Beispiel als spitze Kegel 57a, 57b ausgebildet. Durch die versetzte Anordnung in bzw. an jedem Halteelementkopf 80 ergeben sich, bei gleichmässig entlang des Umfanges vorgesehenen Halteelementköpfen 80, für die Klemmhülse im Ganzen zwei Reihen mit zueinander versetzt angeordneten Haltelementen 48a, 48b.

Die Halteelementköpfe 80 sind als separate Bauelemente gefertigt und über einen Klickmechanismus 76 mit der Klemmhülse 34 verbunden. Die Halteelementköpfe 80 weisen, über die gesamte Dicke inklusive Höhe der Kegel 57a, 57b eine etwas grössere Dicke auf als der Körper 33 der Klemmhülse 34 im nicht dichtenden Bereich 46. Dadurch stehen die Halteelementköpfe 80 vor der Montage leicht radial nach aussen über den Körper 33 der Klemmhülse 34 über. Schlauchseitig weisen die Halteelementköpfe 80 radial aussen jeweils eine Art Rampe 90 auf, die bei der Montage das Aufbringen der Aussenhülse und das Einpressen der Halteelemente 48a, 48b in den Schlauchmantel 28 erleichtern.

In dem hier gezeigten Beispiel ist der Klickmechanismus 76 zudem so ausgebildet, dass sich nach Einklicken jedes Halteelementkopfes 80 für jeden Halteelementkopf 80 eine freie Weglänge l in radialer Richtung ergibt, entlang der Haltelementkopf 80 radial nach innen verschoben werden kann (Doppelpfeil V). Diese freie Weglänge l entspricht etwa der Höhe der Kegel 57a, 57b bzw. der Dicke, um welche die Halteelementköpfe 80 vor der Montage über die Klemmhülse 34 hinausragen. Der Klemmmechanismus 76 kann optional ausserdem, so ausgestaltet sein, dass ein verschieben in radialer Richtung nach innen nur gegen einen Widerstand möglich ist. Dies kann z.B. dadurch realisiert werden, dass der Spalt in welchen die Klickelemente der Halteelementköpfe 80 eingreifen radial nach innen sich verjüngend ausgestaltet ist.

In gleicher Darstellung wie in Figur 5 ist in Figur 6 eine weitere Ausführungsform der Klemmhülse 34 gezeigt. Wie im Beispiel aus Figur 5 sind auch hier die Halteelementköpfe 80' als separate Bauteelemente ausgebildet. Statt mit jeweils zwei zueinander versetzten Halteelementen sind die Halteelementköpfe 80' in diesem Beispiel aber nur mit einem als Sägezahn 54 ausgebildeten Halteelement 48 versehen und statt radial verschiebbar zu sein, sind die Halteelementköpfe 80' hier um eine quer zur Längsachse verlaufenden Schwenkachse 62 radial verschwenkbar (Doppelpfeil S). Die Halteelementköpfe 80' sind schwenkbar um eine Welle 82 gelagert. Auch diese Ausgestaltung erleichtert zum einen die Montage und Demontage, zum anderen das einpressen der Haltelemente 48 in den Schlauchmantel, wenn die Aussenhülse über die Halteelementköpfe 80' bewegt wird.

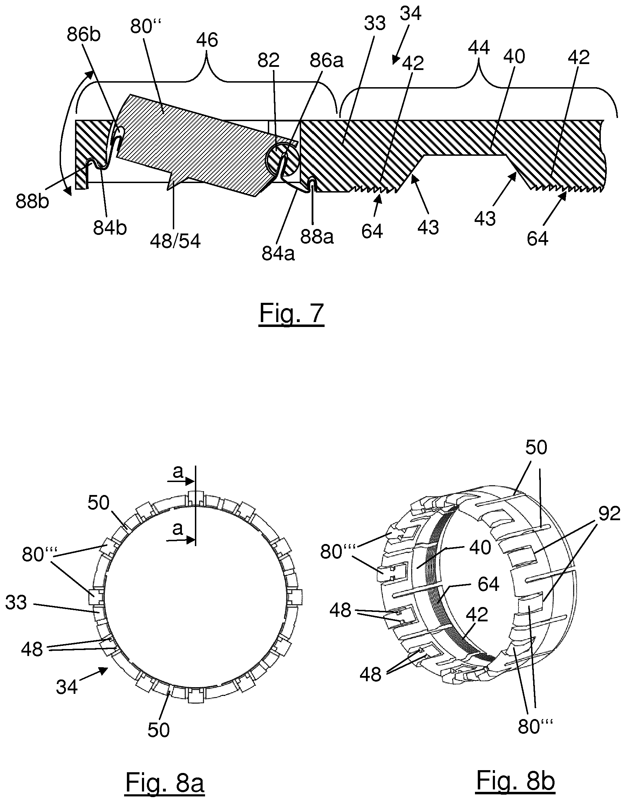

Das gleiche gilt auch für die in der Figur 7 dargestellte Ausführungsform. Im Prinzip ist die Klemmhülse 34 hier wieder gleich aufgebaut, wie die Klemmhülse aus Figur 6, aber die Wellen 82 als auch Stirnseiten der Halteelementköpfe 80'' sind in diesem Beispiel mit Federbauteilen 84a, 84b versehen, welche die Halteelementköpfe 80'' - solange von aussen kein radialer Druck aufgebracht wird - in einer freien Position halten. In dieser freien Position ragen die Halteelementköpfe 80'' radial nach aussen über den Körper 33 der Klemmhülse 34 hinaus, während die Haltelemente 48 nicht oder kaum radial nach innen über den Körper 33 der Klemmhülse 34 hinausragen. Dies erleichtert die Montage, insbesondere das Überschieben der Klemmhülse 34 über das Schlauchende 20 und die Innhülse 31 aber auch das Aufbringen der Aussenhülse 36 über die Klemmhülse 34 und das Einpressend der Haltelemente 48 in den Schlauchmantel 28. Auch für eine Demontage sind die Federbauteile 84a, 84b sehr hilfreich, bringen sie doch beim Entfernen der Aussenhülse 36 die Halteelemente 48 von einer Eindringposition zurück in die freie Position. Die Federbauteile 84a, 84b sind in dem hier gezeigten Beispiel als speziell gebogene Blattfedern ausgebildet, die in entsprechenden Ausnehmungen 86a, 86b der Halteelementköpfe 80" fixiert und in entsprechenden Widerlagern 88a, 88b im Körper 33 der Klemmhülse 34 gehalten sind.

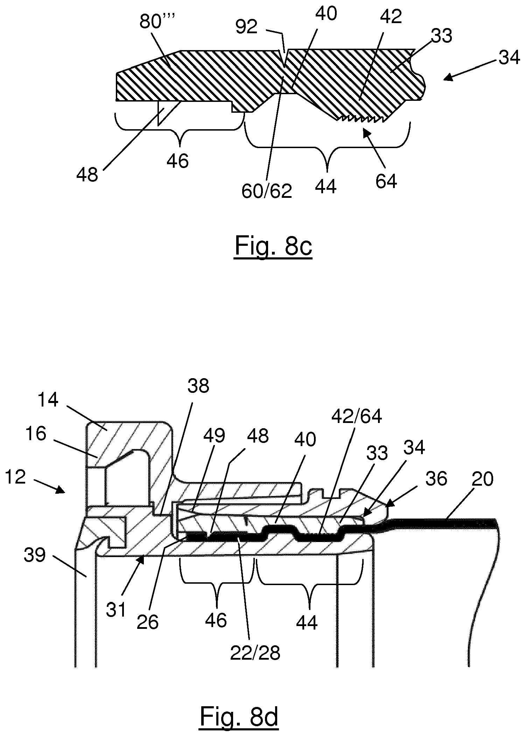

In den Figuren 8a bis 8b ist eine weitere Ausführungsform einer Klemmhülse 34 in verschiedenen Ansichten dargestellt. Die Klemmhülse 34 weist ebenfalls Halteelementköpfe 80''' auf, die aber in diesem Beispiel einstückig mit dem Körper 33 der Klemmhülse ausgebildet sind. Jeder Klemmkopf weist jeweils zwei Haltelemente 48 auf, die in Umfangsrichtung voneinander beabstandet in einer Linie angeordnet sind. Damit die Halteelementköpfe 80''' um eine Schwenkachse 62verschwenkbar sind, sind wie in der Ausführungsform der Figuren 2a bis 2d axial zu beiden Seiten und stirnseitig frei und nicht mit dem Klemmhülsenkörper 33 verbunden. Radial Aussen ist im Bereich der Schwenkachse 62 eine Ausnehmung vorgesehen so, dass sich ähnlich wie für die Ausführungsform der Figuren 2a bis 2d ein Steg 60 im Bereich der Schwenkachse 62 bildet. Aufgrund des gewählten Kunststoffmaterials wirkt dieser Steg 60 wieder ähnlich einem Scharnier.

In den oben gegebenen Ausführungen sind verschiedene Details beispielhaft in Kombination miteinander gezeigt und/oder beschrieben worden. Dies bedeutet jedoch nicht, dass diese nur in der gezeigten und/oder beschriebenen Form miteinander kombiniert werden können. Der Fachmann weiss, in welcher Weise sich Details der vorangehend gezeigten und/oder beschriebenen Ausführungsformen der Erfindung sinnvoll miteinander kombinieren lassen, auch wenn hier aus Platzgründen nicht alle Kombinationen dargestellt werden konnten.

## Patentansprüche

1. Verfahren zum Befestigen eines Schlauchendes (22) in einer Schlauchklemmvorrichtung (30), insbesondere einer Schlauchklemmvorrichtung eines Kupplungselementes einer Schlauchkupplung, wobei
• das Schlauchende (22) radial aussen auf eine Innenhülse (31) gezogen bzw. gestossen wird,
• eine Klemmhülse (34) radial aussen über das Schlauchende (22) geschoben wird und mittels einer Aussenhülse (36) gegen das Schlauchende (22) und die Innenhülse (31) gepresst wird, wobei
▪ ein Schlauchmantel (28) des Schlauchendes (22) zwischen der Klemmhülse (34) und der Innenhülse (31) eingeklemmt wird, und der Schlauchmantel (28)
• im Bereich der Stirnseite (26) des Schlauchendes (22) in einem nicht dichtenden Bereich (46) zwischen Klemmhülse (34) und Innenhülse (31) liegt und von Klemmhülse (34) und Innenhülse (31) nicht dichtend eingeklemmt wird und
• mit einem schlauchseitig axial an den Bereich der Stirnseite (26) des Schlauchendes (22) angrenzenden Bereich des Schlauchendes (22) in einem dichtenden Bereich (44) zwischen Klemmhülse (34) und Innenhülse (31) liegt und der Schlauchmantel (28) des Schlauchendes (22) hier dichtend eingeklemmt wird,
**dadurch gekennzeichnet, dass**
• die Klemmhülse (34) und die Innenhülse (31) im dichtenden Bereich (44) mit gegengleich ausgebildeten Erhöhungen (42, 42') und Vertiefungen (40, 40') versehen sind, die - den Schlauchmantel (28) zwischen sich einklemmend - ineinander greifen, wobei jeweils radial oder leicht geneigt zur Achsrichtung 24 ausgerichtete Seitenflanken (43, 43') der Erhöhungen (42, 42') und Vertiefungen (40, 40') gegeneinander gepresst werden und den Schlauchmantel (28) dichtend zwischen sich einklemmen
• während in dem sich axial in Richtung der Schlauchstirnseite (26) anschliessenden, nicht dichtenden Bereich (46) ohne Erhöhungen (42, 42') und Vertiefungen (40, 40') keine dichtende Wirkung entsteht, aber
• Haltelemente (48), mit welchen die Klemmhülse (34) im nicht dichtenden Bereich (46) versehen ist, mit Hilfe der Aussenhülse (36) radial gegen das Schlauchende (22) gepresst werden, so dass sie in den Schlauchmantel (28) des Schlauchendes (22) eindringen und dieses festhalten.

2. Verfahren nach Anspruch 1,
**dadurch gekennzeichnet, dass** hierbei
die Haltelemente (48) mindestens bis zu 45% bezogen auf die Schlauchmanteldicke in den Schlauchmantel (28) eindringen.

3. Verfahren nach einem der Ansprüche 1 oder 2,
**dadurch gekennzeichnet, dass**
sich die dichtende Klemmung zwischen den Seitenflanken (43, 43') der Erhöhungen (42, 42') und Vertiefungen (40, 40') erhöht sobald der Schlauch (20) unter Druck steht, da dann der Schlauchmantel 28 radial nach aussen gedrückt wird (Pfeile D),
• wodurch einerseits eine axial in Richtung der eingeklemmten Stirnseite (26) des Schlauchendes (22) wirkende Druckkraft (P) auf die Aussenhülse (36) einwirkt und diese fester auf die Klemmhülse (34) und die Innenhülse (31) schiebt, wodurch die Haltelemente (48) im nicht dichtenden Bereich (46) noch tiefer in den Schlauchmantel (28) des Stirnseitenbereichs (26) des Schlauchendes (22) gedrückt werden, und
• wodurch andererseits eine axiale Zugkraft (Z) auf den Schlauchmantel (28) wirkt, die ihn tendenziell aus der Schlauchklemmvorrichtung (30) herauszieht, wobei diese Zugkraft (Z) mittels der Haltelemente (48) vom Schlauch (20) auf die Klemmhülse (34) übertragen wird und die Klemmhülse (34) mit dem Schlauch (20) axial in Richtung (Z) mitgenommen wird, wodurch
▪ sich der Anpressdruck und die Reibung, welche die Seitenflanken (43, 43') der Erhöhungen (42, 42') und Vertiefungen (40, 40') im dichtenden Bereich (44) gegeneinander und auf den Schlauchmantel (28) ausüben, erhöhen,
▪ so dass sich der Schlauchmantel (28) balgartig verformt, was in einer höheren Dichtigkeit und einer grösseren Klemmung resultiert und ein Herausrutschen des Schlauchendes (22) aus der Schlauchklemmvorrichtung (30) verhindert.

4. Schlauchkupplung (10) mit wenigstens einem Kupplungselement (14, 14') umfassend eine Schlauchklemmvorrichtung (30),
• mit einer Innenhülse (31), die dazu dient, in montiertem Zustand ein Schlauchende (22) radial innen abzustützen,
• mit einer Klemmhülse (34), die im montierten Zustand radial aussen auf dem abgestützten Schlauchende (22) platzierbar ist, und
• mit einer Aussenhülse (36), mit deren Hilfe die Klemmhülse (34) gegen das Schlauchende (22) und die Innenhülse (31) pressbar ist,
• wobei die Klemmhülse (34) derart abgestimmt auf die Innenhülse ausgebildet ist, dass in montiertem Zustand Klemmhülse (34) und Innenhülse (31) in ihrem Zusammenwirken und ihrem Zusammenwirken mit dem Schlauchende (22) einen nicht dichtenden Bereich (46) ausbilden, in welchem eine Stirnseite (26) des Schlauchendes (22) zu liegen kommt, und einen dichtenden Bereich (44), in welchem ein schlauchseitig axial an den Stirnseitenbereich (26) des Schlauchendes (22) anschliessender Abschnitt des Schlauchendes (22) zu liegen kommt,
**dadurch gekennzeichnet, dass**
• Klemmhülse (34) und Innenhülse (31) im dichtenden Bereich (44) mit gegengleich ausgebildete Erhöhungen (42, 42') und Vertiefungen (40, 40') versehen sind, die in montiertem Zustand mit dazwischen liegendem Schlauchmantel (28) ineinander greifen, wobei jeweils radial oder leicht geneigt zur Achsrichtung (24) ausgerichtete Seitenflanken (43, 43') der Erhöhungen (42, 42') und Vertiefungen (40, 40') gegeneinander pressbar sind und ein dazwischen befindlicher Schlauchmantel (28) des Schlauchendes (22) dichtend dazwischen eingeklemmbar ist; und wobei
• die Klemmhülse (34) im nicht dichtenden Bereich (46) mit Haltelementen (48) ausgestattet ist, welche so ausgestaltet sind, dass sie in montiertem Zustand eine Eindringposition einnehmen, in welcher sie von radial aussen in den Schlauchmantel (28) des Schlauchendes (22) eingedrungen vorliegen.

5. Kupplungselement (14, 14') für eine Schlauchkupplung (10) gemäß Anspruch 4 mit einer Schlauchklemmvorrichtung (30), umfassend
• eine Innenhülse (31), die dazu dient, in montiertem Zustand ein Schlauchende (22) radial innen abzustützen,
• eine Klemmhülse (34), die im montierten Zustand radial aussen auf dem Schlauchende (22) platzierbar ist, und
• eine Aussenhülse (36), die im montierten Zustand gegen die Klemmhülse (34), das Schlauchende (22) und die Innenhülse (31) pressbar ist,
• wobei die Klemmhülse (34) derart abgestimmt auf die Innenhülse ausgebildet ist, dass in montiertem Zustand Klemmhülse (34) und Innenhülse (31) in ihrem Zusammenwirken und in ihrem Zusammenwirken mit dem Schlauchende (22) einen nicht dichtenden Bereich (46) ausbilden, in welchem eine Stirnseite (26) des Schlauchendes (22) zu liegen kommt, und einen dichtenden Bereich (44), in welchem ein schlauchseitig axial an den Stirnseitenbereich (26) des Schlauchendes (22) anschliessender Abschnitt des Schlauchendes (22) zu liegen kommt,
**dadurch gekennzeichnet, dass**
• Klemmhülse (34) und Innenhülse (31) im dichtenden Bereich (44) mit gegengleich ausgebildete Erhöhungen (42, 42') und Vertiefungen (40, 40') versehen sind, die in montiertem Zustand mit dazwischen liegendem Schlauchmantel (28) ineinander greifen, wobei jeweils radial oder leicht geneigt zur Achsrichtung (24) ausgerichtete Seitenflanken (43, 43') der Erhöhungen (42, 42') und Vertiefungen (40, 40') gegeneinander pressbar sind und ein dazwischen befindlicher Schlauchmantel (28) dichtend dazwischen einklemmbar ist; und
• die Klemmhülse (34) im nicht dichtenden Bereich (46) mit Haltelementen (48) ausgestattet ist, welche so ausgestaltet sind, dass sie in montiertem Zustand eine Eindringposition einnehmen, in welcher sie von radial aussen in den Schlauchmantel (28) des Schlauchendes (22) eingedrungen vorliegen.

6. Schlauchklemmvorrichtung (30) für eine Schlauchkupplung (10) gemäß Anspruch 4 umfassend
• eine Innenhülse (31), die dazu dient, in montiertem Zustand ein Schlauchende (22) radial innen abzustützen,
• eine Klemmhülse (34), die in montiertem Zustand radial aussen auf dem Schlauchende (22) platzierbar ist,
• eine Aussenhülse (36), welche in montiertem Zustand radial aussen auf der Klemmhülse (34) platzierbar ist und mittels derer die Klemmhülse (34) in montiertem Zustand gegen das Schlauchende (22) und die Innenhülse (31) pressbar ist,
• wobei Klemmhülse (34) und Innenhülse (31) in ihrem Zusammenwirken und in ihrem Zusammenwirken mit dem Schlauchende (22) einen nicht dichtenden Bereich (46) ausbilden, in welchem eine Stirnseite (26) des Schlauchendes (22) zu liegen kommt, und einen dichtenden Bereich (44) ausbilden, in welchem ein schlauchseitig axial an den Stirnseitenbereich (26) des Schlauchendes (22) anschliessender Abschnitt des Schlauchendes (22) zu liegen kommt,
**dadurch gekennzeichnet, dass**
• Klemmhülse (34) und Innenhülse (31) im dichtenden Bereich (44) mit gegengleich ausgebildete Erhöhungen (42, 42') und Vertiefungen (40, 40') versehen sind, die in montiertem Zustand mit dazwischen liegendem Schlauchmantel (28) ineinander greifen, wobei jeweils radial oder leicht geneigt zur Achsrichtung (24) ausgerichtete Seitenflanken (43, 43') der Erhöhungen (42, 42') und Vertiefungen (40, 40') gegeneinander pressbar sind und ein dazwischen befindlicher Schlauchmantel (28) dichtend dazwischen einklemmbar ist; und
• im nicht dichtenden Bereich (46) der Klemmhülse (34) Haltelemente (48) vorgesehen sind, welche so konfiguriert sind, dass sie durch die Montage von radial aussen in den Schlauchmantel (28) des Schlauchendes (22) eindringen und in montiertem Zustand wenigstens bis zu einer vordefinierten Tiefe eingedrungen im Schlauchmantel (28) des Schlauchendes (22) vorliegen und auf diese Weise das Schlauchende (22) fest mit der Klemmhülse (34) verbinden.

7. Klemmhülse (34) und Innenhülse (31) einer Schlauchklemmvorrichtung (30), wobei Klemmhülse (34) und Innenhülse (31) in montiertem Zustand einen Bestandteil der Schlauchklemmvorrichtung (30) bilden, und als solcher Bestandteil dazu ausgebildet sind zusammenzuwirken, wobei
• die Innenhülse (31) dazu dient, in montiertem Zustand ein Schlauchende (22) radial innen abzustützen, und wobei
• die Klemmhülse (34) im montierten Zustand radial aussen auf dem Schlauchende (22) platzierbar ist und mittels einer Aussenhülse (36) gegen das Schlauchende (22) und die Innenhülse (31) pressbar ist, und
• wobei die Klemmhülse (34) derart abgestimmt auf die Innenhülse ausgebildet ist, dass in montiertem Zustand Klemmhülse (34) und Innenhülse (31) in ihrem Zusammenwirken und in ihrem Zusammenwirken mit dem Schlauchende (22) einen nicht dichtenden Bereich (46) ausbilden, in welchem eine Stirnseite (26) des Schlauchendes (22) zu liegen kommt, und einen dichtenden Bereich (44) ausbilden, in welchem ein schlauchseitig axial an den Stirnseitenbereich (26) des Schlauchendes (22) anschliessender Abschnitt des Schlauchendes (22) zu liegen kommt und
**dadurch gekennzeichnet, dass**
• die Klemmhülse (34) und die Innenhülse (31) im dichtenden Bereich (44) mit gegengleich ausgebildete Erhöhungen (42, 42') und Vertiefungen (40, 40') versehen sind, die in montiertem Zustand mit dazwischen liegendem Schlauchmantel (28) ineinander greifen, wobei jeweils radial oder leicht geneigt zur Achsrichtung (24) ausgerichtete Seitenflanken (43, 43') der Erhöhungen (42, 42') und Vertiefungen (40, 40') gegeneinander pressbar sind und ein dazwischen befindlicher Schlauchmantel (28) dichtend dazwischen einklemmbar ist; und
• die Klemmhülse (34) im nicht dichtenden Bereich (46) mit Haltelementen (48) ausgestattet ist, welche so ausgestaltet sind, dass sie in montiertem Zustand eine Eindringposition einnehmen, in welcher sie von radial aussen in den Schlauchmantel (28) des Schlauchendes (22) eingedrungen vorliegen.

8. Klemmhülse (34) und Innenhülse (31) einer Schlauchklemmvorrichtung (30) nach Anspruch 7,
**dadurch gekennzeichnet, dass**
die Haltelemente (48) der Klemmhülse (34) derart ausgestaltet sind, dass sie in montiertem Zustand mindestens bis zu 45% bezogen auf die Schlauchmanteldicke in den Schlauchmantel (28) eingedrungen vorliegen.

9. Klemmhülse (34) und Innenhülse (31) einer Schlauchklemmvorrichtung (30) nach einem der Ansprüche 7 oder 8,
**dadurch gekennzeichnet, dass**
die Haltelemente (48) der Klemmhülse (34) ausgestaltet sind in Form von Sägezähnen (54) und/oder spitzen Kegeln und/oder nagelartig und/oder nadelartig und/oder keilförmig.

10. Klemmhülse (34) und Innenhülse (31) einer Schlauchklemmvorrichtung (30) nach einem der Ansprüche 7 bis 9,
**dadurch gekennzeichnet, dass**
die Haltelemente (48) der Klemmhülse (34) in Umfangsrichtung gleichmässig verteilt angeordnet sind.

11. Klemmhülse (34) und Innenhülse (31) einer Schlauchklemmvorrichtung (30) nach einem der Ansprüche 7 bis 10,
**dadurch gekennzeichnet, dass**
die Klemmhülse (34) im nicht dichtenden Bereich (46) zwei oder mehr sich in Umfangrichtung erstreckende Reihen von Haltelementen (48) aufweist, wobei die Haltelemente (48) in Achsrichtung betrachtet in einer Linie oder versetzt zueinander angeordnet sind.

12. Klemmhülse (34) und Innenhülse (31) einer Schlauchklemmvorrichtung (30) nach einem der Ansprüche 7 bis 11,
**dadurch gekennzeichnet, dass**
die Klemmhülse (34) einen Körper (33) aufweist und die Haltelemente (48) einstückig mit dem Körper (33) der Klemmhülse (34) ausgebildet sind.

13. Klemmhülse (34) und Innenhülse (31) einer Schlauchklemmvorrichtung (30) nach einem der Ansprüche 7 bis 12,
**dadurch gekennzeichnet, dass**
die Klemmhülse (34) einen Körper (33) aufweist und die Haltelemente (48) Bestandteil eines oder mehrer vom Körper (33) der Klemmhülse (34) separaten Bauelemente(s) (66, 80, 80', 80'', 80''') sind, welche(s) vorzugsweise mit Hilfe eines Schnappmechanismus (68, 68') oder Klickmechanismus (76, 76') mit dem Körper (33) der Klemmhülse (34) verbindbar ist/sind.

14. Klemmhülse (34) und Innenhülse (31) einer Schlauchklemmvorrichtung (30) nach einem der Ansprüche 7 bis 13,
**dadurch gekennzeichnet, dass**
die Klemmhülse (34) einen Körper (33) aufweist und die Haltelemente (48) und/oder das/die Bauelement(e), deren Bestandteil die Halteelemente (48) sind, radial verschwenkbar im Körper (33) der Klemmhülse (34) gelagert sind, insbesondere um eine im Körper (33) der Klemmhülse (34) gelagerte Welle (82).

15. Klemmhülse (34) und Innenhülse (31) einer Schlauchklemmvorrichtung (30) nach Anspruch 13,
**dadurch gekennzeichnet, dass**
das oder die separate(n) Bauelement(e) mit den Haltelementen (48) in radialer Richtung verschiebbar im Körper (33) der Klemmhülse (34) gelagert ist/sind.

16. Klemmhülse (34) und Innenhülse (31) einer Schlauchklemmvorrichtung (30) nach einem der Ansprüche 7 bis 15,
**dadurch gekennzeichnet, dass**
die Haltelemente (48) der Klemmhülse (34) oder die separate(n) Bauelement(e) mit den Haltelementen (48) mittels Federkraft aus einer radial inneren Eindringposition in eine radial äussere freie Position bewegbar sind.

17. Schlauchklemmvorrichtung (30) nach Anspruch 6; bzw. Kupplungselement (14, 14') nach Anspruch 5 oder Schlauchkupplung (10) nach Anspruch 4,
**dadurch gekennzeichnet, dass**
Klemmhülse (34) und Innenhülse (31) ausgebildet sind nach einem der Ansprüchen 7 bis 16.

## Claims

1. A method for fastening a hose end (22) in a hose clamping device (30), in particular a hose clamping device of a coupling element of a hose coupling, wherein
- the hose end (22) is drawn or pushed on the radial outside onto an inner sleeve (31),
- a clamping sleeve (34) is pushed on the radial outside over the hose end (22) and pressed by means of an outer sleeve (36) against the hose end (22) and the inner sleeve (31), wherein
- a hose casing (28) of the hose end (22) is clamped between the clamping sleeve (34) and the inner sleeve (31), and the hose casing (28)
- lies between clamping sleeve (34) and inner sleeve (31) in a non-sealing region (46) in the region of the end face (26) of the hose end (22) and is clamped in a non-sealing manner by clamping sleeve (34) and inner sleeve (31) and
- lies, with a region of the hose end (22) adjoining axially on the region of the end face (26) of the hose end (22) on the hose side, in a sealing region (44) between clamping sleeve (34) and inner sleeve (31) and the hose casing (28) of the hose end (22) is clamped in a sealing manner here,
**characterized in that**
- the clamping sleeve (34) and the inner sleeve (31) are provided in the sealing region (44) with oppositely formed protrusions (42, 42') and depressions (40, 40'), which - clamping the hose casing (28) between them - interlock, wherein lateral flanks (43, 43'), which are each aligned radially or slightly inclined in relation to the axial direction (24), of the protrusions (42, 42') and depressions (40, 40') are pressed against one another and clamp the hose casing (28) between them in a sealing manner,
- while in the non-sealing region (46), which adjoins axially in the direction of the hose end face (26), without protrusions (42, 42') and depressions (40, 40'), no sealing effect results, but
- holding elements (48), with which the clamping sleeve (34) is provided in the non-sealing region (46), are pressed radially against the hose end (22) with the aid of the outer sleeve (36), so that they penetrate into the hose casing (28) of the hose end (22) and hold it.

2. The method according to Claim 1,
**characterized in that** in this case the holding elements (48) penetrate at least up to 45% in relation to the hose casing thickness into the hose casing (28).

3. The method according to any one of Claims 1 or 2,
**characterized in that** the sealing clamping between the lateral flanks (43, 43') of the protrusions (42, 42') and depressions (40, 40') is increased as soon the hose (20) is under pressure, because then the hose casing (28) is pressed radially outward (arrows D),
- whereby, on the one hand, a pressure force (P) acting axially in the direction of the clamped end face (26) of the hose end (22) acts on the outer sleeve (36) and pushes it more solidly onto the clamping sleeve (34) and the inner sleeve (31), whereby the holding elements (48) in the non-sealing region (46) are pressed still deeper into the hose casing (28) of the end face region (26) of the hose end (22), and
- whereby, on the other hand, an axial traction force (Z) acts on the hose casing (28), which has a tendency to withdraw it from the hose clamping device (30), wherein this traction force (Z) is transferred by means of the holding elements (48) from the hose (20) to the clamping sleeve (34) and the clamping sleeve (34) is carried along with the hose (20) axially in the direction (Z), whereby
- the contact pressure force and the friction which the lateral flanks (43, 43') of the protrusions (42, 42') and depressions (40, 40') in the sealing region (44) exert on one another and on the hose casing (28) increase,
- so that the hose casing (28) deforms like bellows, which results in greater leaktightness and greater clamping and prevents the hose end (22) from slipping out of the hose clamping device (30).

4. A hose coupling (10) having at least one coupling element (14, 14') comprising a hose clamping device (30'),
- having an inner sleeve (31), which is used to support a hose end (22) on the radial inside in the installed state,
- having a clamping sleeve (34), which can be placed in the installed state on the radial outside on the supported hose end (22), and
- having an outer sleeve (36), with the aid of which the clamping sleeve (34) can be pressed against the hose end (22) and the inner sleeve (31),
- wherein the clamping sleeve (34) is formed adapted to the inner sleeve such that in the installed state, clamping sleeve (34) and inner sleeve (31), in the interaction thereof and the interaction thereof with the hose end (22), form a non-sealing region (46), in which an end face (26) of the hose end (22) comes to rest, and a sealing region (44), in which a section of the hose end (22) adjoining axially on the end face region (26) of the hose end (22) on the hose side comes to rest,
**characterized in that**
- clamping sleeve (34) and inner sleeve (31) are provided in the sealing region (44) with oppositely formed protrusions (42, 42') and depressions (40, 40'), which, in the installed state, interlock with hose casing (28) interposed, wherein lateral flanks (43, 43'), aligned radially or slightly inclined in relation to the axial direction (24), of the protrusions (42, 42') and depressions (40, 40') can be pressed against one another and a hose casing (28) of the hose end (22) located in between can be clamped in between in a sealing manner; and wherein
- the clamping sleeve (34) is equipped in the non-sealing region (46) with holding elements (48), which are configured so that they assume a penetrating position in the installed state, in which they are provided penetrating from the radial outside into the hose casing (28) of the hose end (22).

5. A coupling element (14, 14') for a hose coupling (10) according to Claim 4 having a hose clamping device (30), comprising
- an inner sleeve (31), which is used to support a hose end (22) on the radial inside in the installed state,
- a clamping sleeve (34), which can be placed on the radial outside on the hose end (22) in the installed state, and
- an outer sleeve (36), which can be pressed against the clamping sleeve (34), the hose end (22), and the inner sleeve (31) in the installed state,
- wherein the clamping sleeve (34) is formed adapted to the inner sleeve such that in the installed state, clamping sleeve (34) and inner sleeve (31), in the interaction thereof and the interaction thereof with the hose end (22), form a non-sealing region (46), in which an end face (26) of the hose end (22) comes to rest, and a sealing region (44), in which a section of the hose end (22) adjoining axially on the end face region (26) of the hose end (22) on the hose side comes to rest,
**characterized in that**
- clamping sleeve (34) and inner sleeve (31) are provided in the sealing region (44) with oppositely formed protrusions (42, 42') and depressions (40, 40'), which, in the installed state, interlock with hose casing (28) interposed, wherein lateral flanks (43, 43'), aligned radially or slightly inclined in relation to the axial direction (24), of the protrusions (42, 42') and depressions (40, 40') can be pressed against one another and a hose casing (28) located in between can be clamped in between in a sealing manner; and wherein
- the clamping sleeve (34) is equipped in the non-sealing region (46) with holding elements (48), which are configured so that they assume a penetrating position in the installed state, in which they are provided penetrating from the radial outside into the hose casing (28) of the hose end (22).

6. A hose clamping device (30) for a hose coupling (10) according to Claim 4, comprising
- an inner sleeve (31), which is used to support a hose end (22) on the radial inside in the installed state,
- a clamping sleeve (34), which can be placed on the radial outside on the hose end (22) in the installed state, and
- an outer sleeve (36), which can be placed on the radial outside on the clamping sleeve (34) in the installed state and by means of which the clamping sleeve (34) can be pressed against the hose end (22) and the inner sleeve (31) in the installed state,
- wherein clamping sleeve (34) and inner sleeve (31), in the interaction thereof and the interaction thereof with the hose end (22), form a non-sealing region (46), in which an end face (26) of the hose end (22) comes to rest, and a sealing region (44), in which a section of the hose end (22) adjoining axially on the end face region (26) of the hose end (22) on the hose side comes to rest,
**characterized in that**
- clamping sleeve (34) and inner sleeve (31) are provided in the sealing region (44) with oppositely formed protrusions (42, 42') and depressions (40, 40'), which, in the installed state, interlock with hose casing (28) interposed, wherein lateral flanks (43, 43'), aligned radially or slightly inclined in relation to the axial direction (24), of the protrusions (42, 42') and depressions (40, 40') can be pressed against one another and a hose casing (28) located in between can be clamped in between in a sealing manner; and
- holding elements (48) are provided in the non-sealing region (46) of the clamping sleeve (34), which are configured such that they penetrate from the radial outside into the hose casing (28) of the hose end (22) due to the installation and in the installed state are provided penetrating into the hose casing (28) of the hose end (22) at least up to a predefined depth and in this manner connect the hose end (22) fixedly to the clamping sleeve (34).

7. A clamping sleeve (34) and inner sleeve (31) of a hose clamping device (30), wherein clamping sleeve (34) and inner sleeve (31) form a part of the hose clamping device (30) in the installed state, and are configured to interact as such a part for this purpose, wherein
- the inner sleeve (31) is used to support a hose end (22) on the radial inside in the installed state, and wherein
- the clamping sleeve (34) can be placed on the radial outside on the hose end (22) in the installed state and can be pressed by means of an outer sleeve (36) against the hose end (22) and the inner sleeve (31), and
- wherein the clamping sleeve (34) is formed adapted to the inner sleeve such that in the installed state, clamping sleeve (34) and inner sleeve (31), in the interaction thereof and the interaction thereof with the hose end (22), form a non-sealing region (46), in which an end face (26) of the hose end (22) comes to rest, and a sealing region (44), in which a section of the hose end (22) adjoining axially on the end face region (26) of the hose end (22) on the hose side comes to rest and
**characterized in that**
- clamping sleeve (34) and inner sleeve (31) are provided in the sealing region (44) with oppositely formed protrusions (42, 42') and depressions (40, 40'), which, in the installed state, interlock with hose casing (28) interposed, wherein lateral flanks (43, 43'), aligned radially or slightly inclined in relation to the axial direction (24), of the protrusions (42, 42') and depressions (40, 40') can be pressed against one another and a hose casing (28) located in between can be clamped in between in a sealing manner; and
- the clamping sleeve (34) is equipped in the non-sealing region (46) with holding elements (48), which are configured such that in the installed state, they assume a penetration position, in which they are provided penetrating from the radial outside into the hose casing (28) of the hose end (22).

8. The clamping sleeve (34) and inner sleeve (31) of a hose clamping device (30) according to Claim 7,
**characterized in that** the holding elements (48) of the clamping sleeve (34) are configured such that they are provided penetrating at least up to 45% in relation to the hose casing thickness into the hose casing (28) in the installed state.

9. The clamping sleeve (34) and inner sleeve (31) of a hose clamping device (30) according to any one of Claims 7 or 8,
**characterized in that** the holding elements (48) of the clamping sleeve (34) are configured in the form of saw teeth (54) and/or pointed cones and/or nail-like and/or needle-like and/or wedge-shaped.

10. The clamping sleeve (34) and inner sleeve (31) of a hose clamping device (30) according to any one of Claims 7 to 9,
**characterized in that** the holding elements (48) of the clamping sleeve (34) are arranged uniformly distributed in the circumferential direction.

11. The clamping sleeve (34) and inner sleeve (31) of a hose clamping device (30) according to any one of Claims 7 to 10,
**characterized in that** the clamping sleeve (34) has, in the non-sealing region (46), two or more rows of holding elements (48) extending in the circumferential direction, wherein the holding elements (48) are arranged in a line or offset in relation to one another viewed in the axial direction.

12. The clamping sleeve (34) and inner sleeve (31) of a hose clamping device (30) according to any one of Claims 7 to 11,
**characterized in that** the clamping sleeve (34) has a body (33) and the holding elements (48) are integrally formed with the body (33) of the clamping sleeve (34).

13. The clamping sleeve (34) and inner sleeve (31) of a hose clamping device (30) according to any one of Claims 7 to 12,
**characterized in that** the clamping sleeve (34) has a body (33) and the holding elements (48) are part of one or more component(s) (66, 80, 80', 80", 80''') separate from the body (33) of the clamping sleeve (34), which component(s) preferably is/are connectable with the aid of a snap mechanism (68, 68') or click mechanism (76, 76') to the body (33) of the clamping sleeve (34).

14. The clamping sleeve (34) and inner sleeve (31) of a hose clamping device (30) according to any one of Claims 7 to 13,
**characterized in that** the clamping sleeve (34) has a body (33) and the holding elements (48) and/or the component(s), which are part of the holding elements (48), are mounted so they are radially pivotable in the body (33) of the clamping sleeve (34), in particular about a shaft (82) mounted in the body (33) of the clamping sleeve (34).

15. The clamping sleeve (34) and inner sleeve (31) of a hose clamping device (30) according to Claim 13,
**characterized in that** the separate component(s) is/are mounted with the holding elements (48) so they are displaceable in the radial direction in the body (33) of the clamping sleeve (34).

16. The clamping sleeve (34) and inner sleeve (31) of a hose clamping device (30) according to any one of Claims 7 to 15,
**characterized in that** the holding elements (48) of the clamping sleeve (34) or the separate component(s) with the holding elements (48) are movable by means of spring force from a radially inner penetration position into a radially outer free position.

17. The hose clamping device (30) according to Claim 6 and/or the coupling element (14, 14') according to Claim 5 or the hose coupling (10) according to Claim 4,
**characterized in that** clamping sleeve (34) and inner sleeve (31) are configured according to any one of Claims 7 to 16.

## Revendications

1. Procédé pour la fixation d'une extrémité de tuyau flexible (22) dans un dispositif de serrage de tuyau flexible (30), en particulier un dispositif de serrage de tuyau d'un élément de raccord d'un raccord de tuyau flexible, dans lequel
• l'extrémité de tuyau (22) est tirée ou poussée vers l'extérieur dans le sens radial sur une douille intérieure (31),
• une douille de serrage (34) est enfilée vers l'extérieur dans le sens radial pardessus l'extrémité de tuyau (22) et pressée au moyen d'une douille extérieure (36) contre l'extrémité de tuyau (22) et la douille intérieure (31),
∘ une enveloppe de tuyau (28) de l'extrémité de tuyau (22) étant serrée entre la douille de serrage (34) et la douille intérieure (31), et l'enveloppe de tuyau (28)
• se trouvant au niveau de la face d'extrémité (26) de l'extrémité de tuyau (22) dans une zone non étanche (46) entre la douille de serrage (34) et la douille intérieure (31) et n'étant pas serrée de façon étanche par la douille de serrage (34) et la douille intérieure (31) et
• se trouvant, dans une partie de l'extrémité de tuyau (22) limitrophe de la zone de la face d'extrémité (26) de l'extrémité de tuyau (22) dans le sens axial du tuyau, dans une zone d'étanchéité (44) entre la douille de serrage (34) et la douille intérieure (31) et l'enveloppe de tuyau (28) de l'extrémité de tuyau (22) étant serrée à cet endroit de façon étanche,
**caractérisé en ce que**
• la douille de serrage (34) et la douille intérieure (31) sont munies dans la zone d'étanchéité (44) de saillies (42, 42') et de creux (40, 40') de forme symétrique inverse, qui se mettent en prise les uns dans les autres en serrant entre eux l'enveloppe de tuyau (28), des flancs latéraux (43, 43') des saillies (42, 42') et des creux (40, 40') orientés dans le sens radial ou légèrement inclinés par rapport à la direction de l'axe (24) étant ainsi pressés les uns contre les autres et serrant l'enveloppe de tuyau (28) entre eux de manière étanche,
• tandis qu'il ne se crée pas d'effet d'étanchéité dans la zone sans étanchéité (46) dépourvue de saillies (42, 42') et de creux (40, 40') qui lui fait suite dans le sens axial en direction de la face d'extrémité de tuyau (26), mais
• des éléments de maintien (48), dont la douille de serrage (34) est munie dans la zone sans étanchéité (46), sont pressés dans le sens radial à l'aide de la douille extérieure (36) contre l'extrémité de tuyau (22), de sorte qu'ils pénètrent dans l'enveloppe de tuyau (28) de l'extrémité de tuyau (22) et la retiennent.

2. Procédé selon la revendication 1, **caractérisé en ce que** les éléments de maintien (48) pénètrent dans l'enveloppe de tuyau (28) au moins jusqu'à 45 % de son épaisseur.

3. Procédé selon l'une des revendications 1 ou 2, **caractérisé en ce que** le serrage étanche entre les flancs latéraux (43, 43') des saillies (42, 42') et des creux (40, 40') augmente dès que le tuyau (20) est sous pression, car l'enveloppe de tuyau (28) est alors repoussée vers l'extérieur dans le sens radial (flèche D),
• de sorte que, d'une part, une force de pression (P) agissant dans le sens axial en direction de la face d'extrémité serrée (26) de l'extrémité de tuyau (22) s'exerce sur la douille extérieure (36) et la déplace plus fermement vers la douille de serrage (34) et la douille intérieure (31), ce qui fait pénétrer les éléments de maintien (48) dans la zone sans étanchéité (46) encore plus profondément dans l'enveloppe de tuyau (28) de la zone de face d'extrémité (26) de l'extrémité de tuyau (22), et
• de sorte que, d'autre part, une force de traction axiale (Z) s'exerce sur l'enveloppe de tuyau (28) et tend à tirer celle-ci hors du dispositif de serrage de tuyau flexible (30), tandis que cette force de traction (Z) est transmise au moyen des éléments de maintien (48) du tuyau (20) à la douille de serrage (34) et la douille de serrage (34) est entraînée avec le tuyau (20) dans le sens axial dans la direction (Z),
∘ ce qui augmente la pression d'appui et le frottement que les flancs latéraux (43, 43') des saillies (42, 42') et des creux (40, 40') exercent les uns sur les autres dans la zone d'étanchéité (44) et sur l'enveloppe de tuyau (28),
∘ de sorte que l'enveloppe de tuyau (28) se déforme en soufflet, ce qui produit une plus grande étanchéité et un plus fort serrage et empêche l'extrémité de tuyau (22) de glisser hors du dispositif de serrage de tuyau flexible (30).

4. Raccord de tuyau flexible (10) avec au moins un élément de couplage (14, 14') comprenant un dispositif de serrage de tuyau flexible (30),
• avec une douille intérieure (31) qui sert à soutenir une extrémité de tuyau (22) vers l'intérieur dans le sens radial dans l'état monté,
• avec une douille de serrage (34) qui peut être placée par l'extérieur dans le sens radial sur l'extrémité de tuyau (22) soutenue dans l'état monté et
• avec une douille extérieure (36) à l'aide de laquelle la douille de serrage (34) peut être pressée contre l'extrémité de tuyau (22) et la douille intérieure (31),
• la douille de serrage (34) étant adaptée à la douille intérieure de telle façon que dans l'état monté, la douille de serrage (34) et la douille intérieure (31) forment en coopérant entre elles et avec l'extrémité de tuyau (22) une zone sans étanchéité (46) dans laquelle une face d'extrémité (26) de l'extrémité de tuyau (22) vient reposer, et une zone d'étanchéité (44) dans laquelle vient reposer une partie de l'extrémité de tuyau (22) qui fait suite à la zone de face d'extrémité (26) de l'extrémité de tuyau (22) du côté du tuyau dans le sens axial,
**caractérisé en ce que**
• la douille de serrage (34) et la douille intérieure (31) sont munies dans la zone d'étanchéité (44) de saillies (42, 42') et de creux (40, 40') de forme symétrique inverse qui se mettent en prise les uns dans les autres dans l'état monté avec l'enveloppe de tuyau (28) entre eux, des flancs latéraux (43, 43') des saillies (42, 42') et des creux (40, 40') orientés dans le sens radial ou légèrement inclinés par rapport à la direction de l'axe (24) pouvant être pressés les uns contre les autres et une enveloppe de tuyau (28) de l'extrémité de tuyau (22) située entre eux pouvant être serrée entre eux de façon étanche, et
• la douille de serrage (34) étant munie dans la zone sans étanchéité (46) d'éléments de maintien (48) qui sont conformés de telle manière que dans l'état monté, ils prennent une position de pénétration dans laquelle ils pénètrent par l'extérieur dans le sens radial dans l'enveloppe de tuyau (28) de l'extrémité de tuyau (22).

5. Élément de couplage (14, 14') pour un raccord de tuyau flexible (10) selon la revendication 4 avec un dispositif de serrage de tuyau flexible (30), comprenant
• une douille intérieure (31) qui sert à soutenir une extrémité de tuyau (22) vers l'intérieur dans le sens radial dans l'état monté,
• une douille de serrage (34) qui peut être placée par l'extérieur dans le sens radial sur l'extrémité de tuyau (22) dans l'état monté et
• une douille extérieure (36) qui peut être pressée dans l'état monté contre la douille de serrage (34), l'extrémité de tuyau (22) et la douille intérieure (31),
• dans lequel la douille de serrage (34) est adaptée à la douille intérieure de telle façon que dans l'état monté, la douille de serrage (34) et la douille intérieure (31) forment en coopérant entre elles et avec l'extrémité de tuyau (22) une zone sans étanchéité (46) dans laquelle une face d'extrémité (26) de l'extrémité de tuyau (22) vient reposer, et une zone d'étanchéité (44) dans laquelle vient reposer une partie de l'extrémité de tuyau (22) qui fait suite à la zone de face d'extrémité (26) de l'extrémité de tuyau (22) du côté du tuyau dans le sens axial,
**caractérisé en ce que**
• la douille de serrage (34) et la douille intérieure (31) sont munies dans la zone d'étanchéité (44) de saillies (42, 42') et de creux (40, 40') de forme symétrique inverse qui se mettent en prise les uns dans les autres dans l'état monté avec l'enveloppe de tuyau (28) entre eux, des flancs latéraux (43, 43') des saillies (42, 42') et des creux (40, 40') orientés dans le sens radial ou légèrement inclinés par rapport à la direction de l'axe (24) pouvant être pressés les uns contre les autres et une enveloppe de tuyau (28) de l'extrémité de tuyau (22) située entre eux pouvant être serrée entre eux de façon étanche, et
• la douille de serrage (34) est munie dans la zone sans étanchéité (46) d'éléments de maintien (48) qui sont conformés de telle manière que dans l'état monté, ils prennent une position de pénétration dans laquelle ils pénètrent par l'extérieur dans le sens radial dans l'enveloppe de tuyau (28) de l'extrémité de tuyau (22).

6. Dispositif de serrage de tuyau flexible (30) pour un raccord de tuyau flexible (10) selon la revendication 4, comprenant
• une douille intérieure (31) qui sert à soutenir une extrémité de tuyau (22) vers l'intérieur dans le sens radial dans l'état monté,
• une douille de serrage (34) qui peut être placée par l'extérieur dans le sens radial sur l'extrémité de tuyau (22) dans l'état monté et
• une douille extérieure (36) qui peut être placée par l'extérieur dans le sens radial sur la douille de serrage (34) dans l'état monté et au moyen de laquelle la douille de serrage (34) peut être pressée contre l'extrémité de tuyau (22) et la douille intérieure (31) dans l'état monté,
• la douille de serrage (34) et la douille intérieure (31) formant en coopérant entre elles et avec l'extrémité de tuyau (22) une zone sans étanchéité (46) dans laquelle une face d'extrémité (26) de l'extrémité de tuyau (22) vient reposer, et une zone d'étanchéité (44) dans laquelle vient reposer une partie de l'extrémité de tuyau (22) qui se raccorde à la zone de face d'extrémité (26) de l'extrémité de tuyau (22) du côté du tuyau dans le sens axial,
**caractérisé en ce que**
• la douille de serrage (34) et la douille intérieure (31) sont munies dans la zone d'étanchéité (44) de saillies (42, 42') et de creux (40, 40') de forme symétrique inverse qui se mettent en prise les uns dans les autres dans l'état monté avec l'enveloppe de tuyau (28) entre eux, des flancs latéraux (43, 43') des saillies (42, 42') et des creux (40, 40') orientés dans le sens radial ou légèrement inclinés par rapport à la direction de l'axe (24) pouvant être pressés les uns contre les autres et une enveloppe de tuyau (28) située entre eux pouvant être serrée entre eux de façon étanche, et
• la douille de serrage (34) est munie dans la zone sans étanchéité (46) d'éléments de maintien (48) qui sont configurés de telle manière que sous l'effet du montage, ils pénètrent par l'extérieur dans le sens radial dans l'enveloppe de tuyau (28) de l'extrémité de tuyau (22) et pénètrent au moins jusqu'à profondeur prédéfinie dans l'enveloppe de tuyau (28) de l'extrémité de tuyau (22) dans l'état monté et fixent ainsi l'extrémité de tuyau (22) à la douille de serrage (34).

7. Douille de serrage (34) et douille intérieure (31) d'un dispositif de serrage de tuyau flexible (30) dans lequel la douille de serrage (34) et la douille intérieure (31) font partie, dans l'état monté, du dispositif de serrage de tuyau flexible (30) et sont conçues pour coopérer en tant que parties de celui-ci,
• la douille intérieure (31) servant à soutenir une extrémité de tuyau (22) vers l'intérieur dans le sens radial dans l'état monté et
• la douille de serrage (34) pouvant être placée par l'extérieur dans le sens radial sur l'extrémité de tuyau (22) dans l'état monté et pressée contre l'extrémité de tuyau (22) et la douille intérieure (31) au moyen d'une douille extérieure (36),
• la douille de serrage (34) étant adaptée à la douille intérieure de telle façon que dans l'état monté, la douille de serrage (34) et la douille intérieure (31) forment en coopérant entre elles et avec l'extrémité de tuyau (22) une zone sans étanchéité (46) dans laquelle une face d'extrémité (26) de l'extrémité de tuyau (22) vient reposer, et une zone d'étanchéité (44) dans laquelle vient reposer une partie de l'extrémité de tuyau (22) qui se raccorde à la zone de face d'extrémité (26) de l'extrémité de tuyau (22) du côté du tuyau dans le sens axial,
**caractérisées en ce que**
• la douille de serrage (34) et la douille intérieure (31) sont munies dans la zone d'étanchéité (44) de saillies (42, 42') et de creux (40, 40') de forme symétrique inverse qui se mettent en prise les uns dans les autres dans l'état monté avec l'enveloppe de tuyau (28) entre eux, des flancs latéraux (43,43') des saillies (42, 42') et des creux (40, 40') orientés dans le sens radial ou légèrement inclinés par rapport à la direction de l'axe (24) pouvant être pressés les uns contre les autres et une enveloppe de tuyau (28) située entre eux pouvant être serrée entre eux de façon étanche, et
• la douille de serrage (34) est munie dans la zone sans étanchéité (46) d'éléments de maintien (48) qui sont configurés de manière à prendre, dans l'état monté, une position de pénétration dans laquelle ils pénètrent par l'extérieur dans le sens radial dans l'enveloppe de tuyau (28) de l'extrémité de tuyau (22).

8. Douille de serrage (34) et douille intérieure (31) d'un dispositif de serrage de tuyau flexible (30) selon la revendication 7, **caractérisées en ce que** les éléments de maintien (48) de la douille de serrage (34) sont conformés de telle manière que dans l'état monté, ils pénètrent dans l'enveloppe de tuyau (28) jusqu'à 45 % au moins de son épaisseur.

9. Douille de serrage (34) et douille intérieure (31) d'un dispositif de serrage de tuyau flexible (30) selon l'une des revendications 7 ou 8, **caractérisées en ce que** les éléments de maintien (48) de la douille de serrage (34) sont réalisés sous la forme de dents de scie (54) et/ou de cônes pointus et/ou de clous et/ou d'aiguilles et/ou de coins.

10. Douille de serrage (34) et douille intérieure (31) d'un dispositif de serrage de tuyau flexible (30) selon l'une des revendications 7 à 9, **caractérisées en ce que** les éléments de maintien (48) de la douille de serrage (34) sont répartis à intervalles réguliers dans le sens de la circonférence.

11. Douille de serrage (34) et douille intérieure (31) d'un dispositif de serrage de tuyau flexible (30) selon l'une des revendications 7 à 10, caractérisées ce que la douille de serrage (34) présente dans la zone sans étanchéité (46) deux ou plusieurs rangées d'éléments de maintien (48) qui s'étendent dans le sens de la circonférence, les éléments de maintien (48) étant disposés, vus dans le sens de l'axe, sur une ligne ou décalés les uns par rapport aux autres.

12. Douille de serrage (34) et douille intérieure (31) d'un dispositif de serrage de tuyau flexible (30) selon l'une des revendications 7 à 11, **caractérisées en ce que** la douille de serrage (34) présente un corps (33) et les éléments de maintien (48) sont formés d'un seul tenant avec le corps (33) de la douille de serrage (34).

13. Douille de serrage (34) et douille intérieure (31) d'un dispositif de serrage de tuyau flexible (30) selon l'une des revendications 7 à 12, **caractérisées en ce que** la douille de serrage (34) présente un corps (33) et les éléments de maintien (48) font partie d'un ou plusieurs éléments de construction (66, 80, 80', 80", 80''') séparés du corps (33) de la douille de serrage (34), qui peuvent être assemblés au corps (33) de la douille de serrage (34), de préférence à l'aide d'un mécanisme d'enclenchement (68, 68') ou d'un mécanisme d'encliquetage (76, 76').

14. Douille de serrage (34) et douille intérieure (31) d'un dispositif de serrage de tuyau flexible (30) selon l'une des revendications 7 à 13, **caractérisées en ce que** la douille de serrage (34) présente un corps (33) et les éléments de maintien (48) et/ou le ou les éléments de construction, dont font partie les éléments de maintien (48), sont disposés dans le corps (33) de la douille de serrage (34) de façon à pouvoir pivoter dans le sens radial, en particulier autour d'un axe (82) supporté dans le corps (33) de la douille de serrage (34).

15. Douille de serrage (34) et douille intérieure (31) d'un dispositif de serrage de tuyau flexible (30) selon la revendication 13, **caractérisées en ce que** le ou les éléments de construction séparés sont supportés avec possibilité de translation dans le sens radial avec les éléments de maintien (48) dans le corps (33) de la douille de serrage (34).

16. Douille de serrage (34) et douille intérieure (31) d'un dispositif de serrage de tuyau flexible (30) selon l'une des revendications 7 à 15, **caractérisées en ce que** les éléments de maintien (48) de la douille de serrage (34) ou le ou les éléments de construction séparés peuvent se déplacer avec les éléments de maintien (48) au moyen de la force d'un ressort d'une position de pénétration intérieure dans le sens radial à une position libre extérieure dans le sens radial.

17. Dispositif de serrage de tuyau flexible (30) selon la revendication 6 ou élément de couplage (14, 14') selon la revendication 5 ou raccord de tuyau flexible (10) selon la revendication 4, **caractérisé en ce que** la douille de serrage (34) et la douille intérieure (31) sont conformées selon l'une des revendications 7 à 16.
